# EUROPEAN PATENT SPECIFICATION

(11) **EP 4 082 246 B1**
(45) Date of publication and mention of the grant of the patent: **22.07.2026**
(21) Application number: 21740997.8
(22) Date of filing: 18.01.2021
(51) Int. Cl.: H04W 36/00, H04W 36/08, H04W 36/14, H04W 48/18, H04W 24/08, H04W 48/20

(54) **USER EQUIPMENT AND METHOD FOR CELL RESELECTION**
BENUTZERGERÄT UND VERFAHREN ZUR ZELLENNEUAUSWAHL
ÉQUIPEMENT UTILISATEUR ET PROCÉDÉ DE RESÉLECTION DE CELLULE

(30) Priority: 18.01.2020 US 202062962932 P
(43) Date of publication of application: 02.11.2022
(73) Proprietor: Sharp Kabushiki Kaisha, Sakai-shi, Osaka 590-8522 (JP)
(72) Inventor: SHIH, Meiju, Taipei 114 Taiwan (CN); CHEN, Hungchen, Taipei 114 Taiwan (CN); TSENG, Yunglan, Taipei 114 Taiwan (CN)
(74) Representative: Müller-Boré & Partner Patentanwälte PartG mbB
(86) International application number: PCT/CN2021/072458
(87) International publication number: WO 2021/143900

(56) References cited:
- WO-A1-2011/032595
- WO-A1-2018/228294
- WO-A1-2019/138060
- CN-A- 107 197 486
- CN-A- 108 738 096
- CN-A- 109 246 775
- CN-A- 110 603 855
- US-B2- 11 611 912
- SAMSUNG: "Idle mobility aspects to support network slicing", vol. RAN WG2, no. Berlin, Germany; 20170821 - 20170825, 20 August 2017 (2017-08-20), XP051317987, Retrieved from the Internet <URL:http://www.3gpp.org/ftp/Meetings_3GPP_SYNC/RAN2/Docs/> [retrieved on 20170820]

## Description

### FIELD

The present disclosure is related to wireless communication and more specifically, to a method for cell reselection performed by a user equipment, and a user equipment.

### BACKGROUND

Various efforts have been made to improve different aspects of wireless communication for cellular wireless communication systems, such as fifth-generation (5G) New Radio (NR), by improving data rate, latency, reliability, and mobility. The 5G NR system is designed to provide flexibility and configurability to optimize the network services and types, accommodating various use cases such as enhanced Mobile Broadband (eMBB), massive Machine-Type Communication (mMTC), and Ultra-Reliable and Low-Latency Communication (URLLC). However, as the demand for radio access continues to increase, there exists a need for further improvements in the art.

WO 2019/138060 A1 describes a user equipment (UE) comprising a receiver for receiving a paging message from a base station. A processor determines at least one network slice to which the paging message pertains based on the received paging message. The disclosure further relates to a UE comprising a receiver for receiving information on a plurality of network slices. The information includes for each network slice a shortened network slice ID identifying the respective network slice and includes mapping information defining a mapping between the shortened network slice ID and a full network slice ID. A processor determines a network slice and the corresponding full network slice ID and further determines the corresponding shortened network slice ID based on the received mapping information. A transmitter transmits a data transmission preparation message to the base station that comprises the determined shortened network slice ID.

WO 2018/228294 A1 describes a cell reselection method, comprising: a wireless access network device generating cell reselection information, the cell reselection information comprising the identifier of at least one carrier frequency and the identifier of a network slice supported by each carrier frequency of the at least one carrier frequency; and the wireless access network device sending the cell reselection information to the terminal device, the cell reselection information being used by the terminal device to perform cell reselection.

### SUMMARY

The above and other objects are achieved by a method for cell reselection performed by a user equipment, and a user equipment, as defined in the independent claims, respectively. Preferred embodiments are set forth in the dependent claims.

### BRIEF DESCRIPTION OF THE DRAWINGS

Aspects of the present disclosure are best understood from the following detailed disclosure when read with the accompanying drawings. Various features are not drawn to scale. Dimensions of various features may be arbitrarily increased or reduced for clarity of discussion.
FIG. 1 is a flowchart illustrating a method performed by a UE for cell reselection according to an example implementation of the present disclosure.
FIG. 2A is a flowchart illustrating a cell reselection procedure according to an example implementation of the present disclosure.
FIG. 2B is a flowchart illustrating a cell reselection procedure according to another example implementation of the present disclosure.
FIG. 3 is a flowchart illustrating a method performed by a UE for cell reselection considering a prioritized intended slice according to an example implementation of the present disclosure.
FIG. 4 is a block diagram illustrating a node for wireless communication in accordance with various aspects of the present disclosure.

### DESCRIPTION

Abbreviations used in this disclosure include:

| Abbreviation | Full name |
|---|---|
| 3GPP | 3^{rd} Generation Partnership Project |
| 5G | 5^{th} Generation |
| AS | Access Stratum |
| BS | Base Station |
| CA | Carrier Aggregation |
| CN | Core Network |
| DC | Dual Connectivity |
| DL | Downlink |
| eMBB | enhanced Mobile Broadband |
| E-UTRA | Evolved Universal Terrestrial Radio Access |
| EN-DC | E-UTRA NR Dual Connectivity |
| ID | Identifier / Identity |
| IE | Information Element |
| IoT | Internet of Things |
| LTE | Long Term Evolution |
| MAC | Medium Access Control |
| MCG | Master Cell Group |
| MIB | Master Information Block |
| mMTC | massive Machine-Type Communication |
| MN | Master Node |
| MR-DC | Multi-RAT Dual Connectivity |
| NAS | Non-Access Stratum |
| NE-DC | NR E-UTRA-Dual Connectivity |
| NGEN-DC | Next Generation E-UTRA NR-Dual Connectivity |
| NPN | Non-Public Network |
| NR | New Radio |
| NR-DC | NR NR-Dual Connectivity |
| NR-U | NR-Unlicensed |
| NSSAI | Network Slice Selection Assistance Information |
| NW | Network |
| PCell | Primary Cell |
| PCI | Physical Cell Identity |
| PSCell | Primary SCG Cell / Primary Secondary Cell |
| PDCP | Packet Data Convergence Protocol |
| PDSCH | Physical Downlink Shared Channel |
| PHY | Physical (layer) |
| PLMN | Public Land Mobile Network |
| RAN | Radio Access Network |
| RAT | Radio Access Technology |
| RF | Radio Frequency |
| RLC | Radio Link Control |
| RNA | RAN Notification Area |
| RRC | Radio Resource Control |
| S-NSSAI | Single Network Slice Selection Assistance Information |
| SCell | Secondary Cell |
| SCG | Secondary Cell Group |
| SDAP | Service Data Adaptation Protocol |
| SIB | System Information Block |
| SN | Secondary Node |
| TA | Tracking Area |
| TS | Technical Specification |
| UE | User Equipment |
| UL | Uplink |
| USIM | Universal Subscriber Identity Module |
| URLLC | Ultra-Reliable and Low-Latency Communication |
| V2X | Vehicle-to-Everything |

Strong demand in wireless communication has been expected in vertical markets, as connectivity and mobility empower the transformation and innovation in industries such as manufacturing, transportation, energy and civil services, healthcare, and many more. These diverse vertical services bring about a wide range of performance requirements in throughput, capacity, latency, mobility, reliability, position accuracy, etc. NR technology promises a common RAN platform to meet the challenges of current and future use cases and services, not only for those that we can envision today but also for those that we cannot yet imagine. The concept of network slicing in 3GPP Rel-15 further advances network architecture towards more flexibility and higher scalability for a multitude of services of disparate requirements.

While 3GPP Rel-15 specifications can provide the foundation of a common connectivity platform for various services, more efforts should be made in 3GPP Rel-17 on RAN support of network slicing to make it a tool that network operators can apply to meet the challenge of opening a new source of revenue in addition to the one derived from customer subscription. More particularly, the new work should provide technical tools in RAN for network operators to get application providers involved in customizing RAN's design, deployment, and operation for better support of the application providers' business. This provides network operators the possibility of benefiting directly from the business success of certain major application providers, generating better investment return than by sustaining the explosion of mobile data from the over-the-top business practices.

In the next-generation cellular network, for RAN support of network slicing, a slice-based cell reselection under network control is suggested to enable a UE to quickly access to the cell supporting the UE's intended slice. However, it is unclear how the UE knows its intended slice and how the slice-based cell reselection mechanism works. Moreover, the definition of the intended slice is unclear. In the present disclosure, a slice-based intra-frequency cell reselection mechanism is disclosed to enable the UE to quickly access to the cell supporting the UE's intended slice in an energy-efficient and/or low-latency manner.

The following contains specific information related to implementations of the present disclosure. The drawings and their accompanying detailed description are merely directed to implementations. However, the present disclosure is not limited to these implementations. Other variations and implementations of the present disclosure will be obvious to those skilled in the art.

Unless noted otherwise, like or corresponding elements among the drawings may be indicated by like or corresponding reference numerals. Moreover, the drawings and illustrations in the present disclosure are generally not to scale and are not intended to correspond to actual relative dimensions.

For the purposes of consistency and ease of understanding, like features may be identified (although, in some examples, not illustrated) by the same numerals in the drawings. However, the features in different implementations may differ in other respects and shall not be narrowly confined to what is illustrated in the drawings.

The phrases "in one implementation," or "in some implementations," may each refer to one or more of the same or different implementations. The term "coupled" is defined as connected whether directly or indirectly via intervening components and is not necessarily limited to physical connections. The term "comprising" means "including, but not necessarily limited to" and specifically indicates open-ended inclusion or membership in the disclosed combination, group, series or equivalent. The expression "at least one of A, B and C" or "at least one of the following: A, B and C" means "only A, or only B, or only C, or any combination of A, B and C."

The terms "system" and "network" may be used interchangeably. The term "and/or" is only an association relationship for disclosing associated objects and represents that three relationships may exist such that A and/or B may indicate that A exists alone, A and B exist at the same time, or B exists alone. "A and/or B and/or C" may represent that at least one of A, B, and C exists. The character "/" generally represents that the associated objects are in an "or" relationship.

For the purposes of explanation and non-limitation, specific details such as functional entities, techniques, protocols, standards, and the like are set forth for providing an understanding of the disclosed technology. In other examples, detailed disclosures of well-known methods, technologies, systems, architectures, and the like are omitted so as not to obscure the present disclosure with unnecessary details.

Persons skilled in the art will immediately recognize that any disclosed network function(s) or algorithm(s) may be implemented by hardware, software or a combination of software and hardware. Disclosed functions may correspond to modules which may be software, hardware, firmware, or any combination thereof.

A software implementation may include computer-executable instructions stored on a computer-readable medium, such as memory or other type of storage devices. One or more microprocessors or general-purpose computers with communication processing capability may be programmed with corresponding computer-executable instructions and perform the disclosed network function(s) or algorithm(s).

The microprocessors or general-purpose computers may include Application Specific Integrated Circuits (ASICs), programmable logic arrays, and/or using one or more Digital Signal Processors (DSPs). Although some of the disclosed implementations are oriented to software installed and executing on computer hardware, alternative implementations implemented as firmware or as hardware or as a combination of hardware and software are well within the scope of the present disclosure. The computer-readable medium may include, but is not limited to, Random Access Memory (RAM), Read-Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

A radio communication network architecture such as a Long-Term Evolution (LTE) system, an LTE-Advanced (LTE-A) system, an LTE-Advanced Pro system, or a 5G NR RAN may typically include at least one base station (BS), at least one UE, and one or more optional network elements that provide connection within a network. The UE may communicate with the network, such as a Core Network (CN), an Evolved Packet Core (EPC) network, an Evolved Universal Terrestrial RAN (E-UTRAN), a Next-Generation Core (NGC), a 5G Core (5GC), or an internet via a RAN established by one or more BSs.

A UE may include, but is not limited to, a mobile station, a mobile terminal or device, or a user communication radio terminal. The UE may be a portable radio equipment that includes, but is not limited to, a mobile phone, a tablet, a wearable device, a sensor, a vehicle, or a Personal Digital Assistant (PDA) with wireless communication capability. The UE may be configured to receive and transmit signals over an air interface to one or more cells in a RAN.

The BS may be configured to provide communication services according to at least a Radio Access Technology (RAT) such as Worldwide Interoperability for Microwave Access (WiMAX), Global System for Mobile communications (GSM) that is often referred to as 2G, GSM Enhanced Data rates for GSM Evolution (EDGE) RAN (GERAN), General Packet Radio Service (GPRS), Universal Mobile Telecommunication System (UMTS) that is often referred to as 3G based on basic Wideband-Code Division Multiple Access (W-CDMA), High-Speed Packet Access (HSPA), LTE, LTE-A, evolved/enhanced LTE (eLTE) that is LTE connected to 5GC, NR (often referred to as 5G), and/or LTE-A Pro. However, the scope of the present disclosure is not limited to these protocols.

The BS may include, but is not limited to, a node B (NB) in the UMTS, an evolved node B (eNB) in LTE or LTE-A, a radio network controller (RNC) in UMTS, a BS controller (BSC) in the GSM/GERAN, a next-generation eNB (ng-eNB) in an Evolved Universal Terrestrial Radio Access (E-UTRA) BS in connection with 5GC, a next-generation Node B (gNB) in the 5G-RAN (or in the 5G Access Network (5G-AN)), or any other apparatus capable of controlling radio communication and managing radio resources within a cell. The BS may serve one or more UEs via a radio interface.

The BS may be operable to provide radio coverage to a specific geographical area using a plurality of cells included in the RAN. The BS may support the operations of the cells. Each cell may be operable to provide services to at least one UE within its radio coverage.

Each cell (often referred to as a serving cell) may provide services to serve one or more UEs within its radio coverage such that each cell schedules the downlink (DL) and optionally uplink (UL) resources to at least one UE within its radio coverage for DL and optionally UL packet transmissions. The BS may communicate with one or more UEs in the radio communication system via the plurality of cells.

A cell may allocate Sidelink (SL) resources for supporting Proximity Service (ProSe), LTE SL services, and/or LTE/NR Vehicle-to-Everything (V2X) services. Each cell may have overlapped coverage areas with other cells.

In MR-DC cases, the primary cell of an MCG or an SCG may be called a Special Cell (SpCell). A PCell may refer to the SpCell of an MCG. A Primary SCG Cell (PSCell) may refer to the SpCell of an SCG. MCG may refer to a group of serving cells associated with the Master Node (MN), including the SpCell and optionally one or more SCells. An SCG may refer to a group of serving cells associated with the Secondary Node (SN), including the SpCell and optionally one or more SCells.

As disclosed previously, the frame structure for NR supports flexible configurations for accommodating various next-generation (e.g., 5G) communication requirements such as eMBB, mMTC, and URLLC, while fulfilling high reliability, high data rate and low latency requirements. The Orthogonal Frequency-Division Multiplexing (OFDM) technology in the 3GPP may serve as a baseline for an NR waveform. The scalable OFDM numerology such as adaptive sub-carrier spacing, channel bandwidth, and Cyclic Prefix (CP) may also be used.

Two coding schemes are considered for NR, specifically Low-Density Parity-Check (LDPC) code and Polar Code. The coding scheme adaption may be configured based on channel conditions and/or service applications.

At least DL transmission data, a guard period, and UL transmission data should be included in a transmission time interval (TTI) of a single NR frame. The respective portions of the DL transmission data, the guard period, and the UL transmission data should also be configurable based on, for example, the network dynamics of NR. SL resources may also be provided in an NR frame to support ProSe services or V2X services.

Multiple PLMNs may operate on the unlicensed spectrum. Multiple PLMNs may share the same unlicensed carrier. The PLMNs may be public or private. Public PLMNs may be (but are not limited to) the operators or virtual operators which provide radio services to the public subscribers. Public PLMNs may own the licensed spectrum and support the radio access technology on the licensed spectrum as well. Private PLMNs may be (but not limited to) the micro-operators, factories, or enterprises which provide radio services to their private users (e.g., employees or machines). In some implementations, public PLMNs may support more deployment scenarios (e.g., CA between licensed band NR (PCell) and NR-U (SCell), DC between licensed band LTE (PCell) and NR-U (PSCell), stand-alone NR-U, an NR cell with DL in an unlicensed band and UL in a licensed band, DC between a licensed band NR (PCell) and NR-U (PSCell)). In some implementations, private PLMNs mainly support (but are not limited to supporting) the stand-alone unlicensed radio access technology (e.g., stand-alone NR-U).

### Scenarios for cell reselection

It should be noted that although intra-frequency cell reselection is taken as an example in most disclosed implementations, implementations in the present disclosure may also be applied to inter-frequency cell reselection and inter-RAT cell reselection.

### The starting point for the UE to perform slice-based intra-frequency (or inter-frequency) cell reselection

The UE may perform the disclosed slice-based intra-frequency (or inter-frequency) cell reselection in several situations. In one implementation, the UE may perform the (slice-based) intra-frequency (or inter-frequency) cell reselection when the UE has camped on a cell that supports the UE's intended slice(s). In one implementation, the UE may perform the (slice-based) intra-frequency (or inter-frequency) cell reselection when the UE has camped on a cell that does not support the UE's intended slices(s). In one implementation, the UE may perform the (slice-based) intra-frequency (or inter-frequency) cell reselection when the UE has camped on a cell that does not support the RAN support of network slicing (the RAN support of network slicing is also referred to as RAN slice in the present disclosure) but supports the network slice, a cell that does not support the network slice but supports the RAN slice, or a cell that supports neither the RAN slice nor the network slice. In one implementation, the UE may perform the (slice-based) intra-frequency (or inter-frequency) cell reselection when the UE is searching for a cell that supports the UE's intended slice(s), at least the RAN slice, at least the network slice, and/or both the RAN slice and network slice, to camp on. In one implementation, the UE may perform the (slice-based) intra-frequency cell selection when the UE powers on based on the stored (or preconfigured) information of intended slices. The information of intended slices may be stored (or preconfigured) in the NAS layer of the UE. In one implementation, the UE may perform the (slice-based) intra-frequency (or inter-frequency) cell reselection when the UE performs the inter-RAT cell reselection (e.g., from camping on an E-UTRA cell to an NR cell, where the E-UTRA cells and NR cells may be deployed on the same frequency or different frequencies). In one implementation, the UE may perform the (slice-based) intra-frequency (or inter-frequency) cell reselection when a running timer controlled by the UE expires or when a running timer controlled by the UE is stopped by the UE.

### The ending point for the UE to perform slice-based intra-frequency (or inter-frequency) cell reselection

After the UE performs the disclosed slice-based intra-frequency (or inter-frequency) cell reselection, the UE may camp on a suitable cell or an acceptable cell. In some implementations, the cell that the UE (re)selects as the outcome of the disclosed slice-based intra-frequency (or inter-frequency) cell reselection may support the UE's intended slice(s). In some implementations, the cell that the UE (re)selects as the outcome of the disclosed slice-based intra-frequency (or inter-frequency) cell reselection may not support the UE's intended slice(s). For example, when the UE cannot find any cells supporting the UE's intended slice(s), the UE may camp on a suitable cell or an acceptable cell anyway, even though the cell does not support the UE's intended slice(s). In some implementations, the cell that the UE (re)selects as the outcome of the disclosed slice-based intra-frequency (or inter-frequency) cell reselection may support the network slice function but may not support the RAN slice function. In some implementations, the cell that the UE (re)selects as the outcome of the disclosed slice-based intra-frequency (or inter-frequency) cell reselection may support the RAN slice function but may not support the network slice function. In some implementations, the cell that the UE (re)selects as the outcome of the disclosed slice-based intra-frequency (or inter-frequency) cell reselection may support both the network slice function and the RAN slice function. In some implementations, the cell that the UE (re)selects as the outcome of the disclosed slice-based intra-frequency (or inter-frequency) cell reselection may support neither the network slice function nor the RAN slice function.

### The relationship between the frequency and the slice

In one implementation, the frequency on which the UE performs the disclosed slice-based intra-frequency (or inter-frequency) cell reselection may be deployed (e.g., by the PLMN operator(s), by the NPN operator(s)) with one slice, which may or may not be the UE's intended slice. In one implementation, the frequency on which the UE performs the disclosed slice-based intra-frequency (or inter-frequency) cell reselection may be deployed (e.g., by the PLMN operator(s), by the NPN operator(s)) with at least two slices, which may or may not include the UE's intended slice.

### The relationship between the cell and the slice

In one implementation, the cells on the frequency on which the UE performs the disclosed slice-based intra-frequency (or inter-frequency) cell reselection may support the same set of slice(s). For example, cell #1 and cell #2 support the same set of slice(s), which includes slice #1 and slice #2. For an intra-frequency cell reselection case, cell #1 and cell #2 may operate on the same frequency F1, which may be the same as the frequency of the current serving cell of the UE. For an inter-frequency cell reselection case, cell #1 and cell #2 may operate on frequency F1 and frequency F2, respectively, which may be different from the frequency of the current serving cell of the UE. The same set of slice(s) (e.g., slice #1 and slice #2) may or may not include the UE's intended slice. In one implementation, although cell #1 and cell #2 support the same set of slice(s) (e.g., slice #1 and slice #2), cell #1 and cell #2 may have different preferred (or prioritized) slices. For example, the preferred (prioritized) slice in cell #1 may be slice #1, while the preferred (prioritized) slice in cell #2 may be slice #2.

In one implementation, the cells on the frequency on which the UE performs the disclosed slice-based intra-frequency (or inter-frequency) cell reselection may support at least one same slice. For example, cell #1 supports slice #1 and slice #2, and cell #2 supports only slice #1. For an intra-frequency cell reselection case, cell #1 and cell #2 may operate on the same frequency F1, which may be the same as the frequency of the current serving cell of the UE. For an inter-frequency cell reselection case, cell #1 and cell #2 may operate on frequency F1 and frequency F2, respectively, which may be different from the frequency of the current serving cell of the UE. The at least one same slice (e.g., slice #1) may or may not be the UE's intended slice.

In one implementation, the cells on the frequency on which the UE performs the disclosed slice-based intra-frequency (or inter-frequency) cell reselection may not support the same set of slice(s), e.g., some slices are commonly supported by some cells but some slices are not. For example, cell #1 supports slice #1 and slice #2, and cell #2 supports slice #2 and slice #3. The UE's intended slice may be commonly supported by some cells (e.g., slice #2). The UE's intended slice may not be commonly supported by some cells (e.g., slice #1). For example, some cells on the frequency may support the UE's intended slice while other cells on the frequency may not support the UE's intended slice. For another example, cell #1 supports slice #1 and cell #2 supports slice #2. In other words, there is no slice commonly supported by cell #1 and cell #2. Cell #1 and cell #2 may operate on the same frequency (intra-frequency cell reselection case) or different frequencies (inter-frequency cell reselection case).

### The number of intended slices on which the (slice-based) intra-frequency (or inter-frequency) cell reselection is based

In one implementation, the UE may perform the (slice-based) intra-frequency (or inter-frequency) cell reselection based on one intended slice. The UE (e.g., the RRC entity of the UE, the NAS layer of the UE) may be (pre)configured with exactly one intended slice. The UE (e.g., the RRC entity of the UE, the NAS layer of the UE) may select one intended slice based on a target service type (e.g., a URLLC service or an eMBB service). The UE (e.g., the RRC entity of the UE, the NAS layer of the UE) may select one slice based on a target service type as its intended slice. For example, several slices may correspond to the URLLC service. The target service type may be (pre)configured as the NAS information. In one implementation, each intended slice may be associated with or configured with a priority. The priority of a slice may be used for performing the (slice-based) intra-frequency (or inter-frequency) cell reselection. The UE may be (pre)configured with at least two intended slices but select one intended slice among the (pre)configured intended slices or may be informed by the camped/serving cell of one intended slice among the (pre)configured intended slices for (slice-based) intra-frequency (or inter-frequency) cell reselection. For example, the UE may receive, from the camped/serving cell, the configuration including the information of slice(s) that are supported (or selected or allowed) by the camped/serving cell and optionally the associated priority information. The UE may consider the received information of slice(s) as the UE's intended slice. For example, the UE may be instructed by the camped/serving cell that the eMBB slice is the highest priority slice and consider the eMBB slice to be one of the UE's intended slices for cell reselection. The camped/serving cell may mainly support the eMBB slice. The UE may perform intra-frequency (or inter-frequency) cell reselection in search of a cell that supports the one intended slice. For another example, the UE may determine by itself that the eMBB slice is the highest priority slice and consider the eMBB slice to be one of the UE's intended slices for cell reselection. The UE may perform the (slice-based) intra-frequency (or inter-frequency) cell reselection in search of a cell that supports the one intended slice by considering the slice priority information. The cell that the UE selects and/or camps on as the outcome of the (slice-based) intra-frequency (or inter-frequency) cell reselection may or may not support the one intended slice.

In one implementation, the UE may perform the (slice-based) intra-frequency (or inter-frequency) cell reselection based on at least two intended slices. The UE may be (pre)configured with at least two intended slices. The UE may select at least two intended slices based on target service types (e.g., a URLLC service and an eMBB service). In one implementation, each intended slice may be associated with or configured with a priority. The priority of a slice may be used for performing the (slice-based) intra-frequency (or inter-frequency) cell reselection. The UE may apply all the (pre)configured intended slices for the (slice-based) intra-frequency (or inter-frequency) cell reselection. The UE may select at least two intended slices among the (pre)configured intended slices or may be informed by the camped/serving cell of at least two intended slices among the (pre)configured intended slices for the (slice-based) intra-frequency (or inter-frequency) cell reselection. The UE may select at least two slices based on at least one target service type as the intended slices for the (slice-based) intra-frequency (or inter-frequency) cell reselection. The UE may be informed by the camped/serving cell of at least two intended slices, which are supported (or selected or allowed) by the camped/serving cell, for the (slice-based) intra-frequency (or inter-frequency) cell reselection. The UE may perform the (slice-based) intra-frequency (or inter-frequency) cell reselection in search of a cell that supports the at least two intended slices, a cell that supports part of the at least two intended slices, or a cell that supports one of the at least two intended slices. The cell that the UE selects and/or camps on as the outcome of the (slice-based) intra-frequency (or inter-frequency) cell reselection may or may not support the at least two intended slices, part of the at least two intended slices, or one of the at least two intended slices.

### Suitability

In some implementations, the cell that the UE camps on, or the cell that the UE is searching for to camp on, may be "a suitable cell" to the UE or "an acceptable cell" to the UE.

### A suitable cell

In some implementations, a cell may be considered as suitable (i.e., the definition of a suitable cell) if at least one of the following conditions is fulfilled, if some of the following conditions are fulfilled, or if at least all of the following conditions are fulfilled: (1) The cell is part of either the selected PLMN or the registered PLMN or PLMN of the Equivalent PLMN list; (2) The cell selection criteria (e.g., S criterion specified in TS 38.304 v15.5.0) are fulfilled; (3) The cell is not barred according to the latest information provided by NAS; (4) The cell is part of at least one TA that is not part of the list of "Forbidden Tracking Areas" (refer to TS 22.261 v17.1.0), which belongs to a PLMN that fulfils the first condition (1) above, according to the latest information provided by NAS; (5) The cell supports at least one of the UE's intended slices on which the cell reselection is based; (6) The cell supports all the UE's intended slices (e.g., the UE's intended slices may be only one slice or more than one slice) on which the cell reselection is based; (7) The cell supports RAN slice and/or network slice functions.

### An acceptable cell

In some implementations, a cell may be considered as acceptable (i.e., the definition of an acceptable cell) if at least one of the following conditions is fulfilled, if some of the following conditions are fulfilled, or if at least all of the following conditions are fulfilled: (1) The cell is not barred; (2) The cell selection criteria (e.g., S criterion specified in TS 38.304 v15.5.0) are fulfilled; (3) The cell supports at least one of the UE's intended slices on which the cell reselection is based; (4) The cell supports all the UE's intended slices (e.g., the UE's intended slices may be only one slice or more than one slice) on which the cell reselection is based; (5) The cell supports the RAN slice and/or network slice functions; (6) The cell supports the RAN slice and/or network slices related to limited services (e.g., emergency calls, Earthquake & Tsunami Warning System (ETWS) and Commercial Mobile Alert System (CMAS) notification, V2X services).

In one implementation, if the UE camps on an acceptable cell, the UE may enter 'camp on any cell' state and continue performing (the slice-based intra-frequency or inter-frequency) cell reselection for a suitable cell.

### A barred cell

In some implementations, a cell may be barred by the UE if at least one of the following conditions is fulfilled, if some of the following conditions are fulfilled, if all of the following conditions are fulfilled, or if the first condition is fulfilled: (1) The cell is indicated to be barred in the system information of the cell; (2) The cell does not support the RAN slice and/or network slice functions for a UE to perform cell reselection based on its intended slice(s); (3) The cell does not support all the UE's intended slices on which the cell reselection is based, where the cell may support the RAN slice and/or network slice functions; (4) The cell does not support at least one of the UE's intended slices on which the cell reselection is based, where the cell may support the RAN slice and/or network slice functions.

In one implementation, if the UE considers a cell as barred, the UE may bar the cell for a time duration T. The value of T may be (pre)configured or predefined. The value of T may be positive infinity, 300 seconds, etc. The UE may start a timer upon considering a cell as barred. When the timer is running, the UE may consider the cell as barred. When the timer expires (e.g., the time duration T is achieved), the UE may consider the cell as a candidate cell for cell reselection.

### How does the UE know its intended slice

### The definition of a network slice/RAN slice, NSSAI, S-NSSAI, and the UE's intended slice

In one implementation, the UE's intended slice may be a RAN slice and/or network slice. A network slice may be a logical network that provides specific network capabilities and network characteristics. A RAN slice may be the RAN part of a network slice to fulfil the requirement of the network slice. A network slice instance may be a set of network function instances and the required resources (e.g., computation, storage, and networking resources) that form a deployed network slice. A RAN slice configuration may be a set of RAN-related configurations (e.g., PHY configuration, MAC configuration, RLC configuration, PDCP configuration, SDAP configuration, RRC configuration) and the required wireless radio resources that form a RAN slice. There may be an association between a RAN slice and the corresponding network slice.

Network slice information may be the information stored at the UE including one or more of the following: (a) default configured NSSAI; (b) configured NSSAI for a PLMN; (c) mapped S-NSSAI(s) for the configured NSSAI for a PLMN; (d) allowed NSSAI for a PLMN for each access type; (f) mapped S-NSSAI(s) for the allowed NSSAI for a PLMN for each access type; (g) UE's requested NSSAI.

The NSSAI is a collection of S-NSSAIs. A network slice may be uniquely identified by an S-NSSAI. The S-NSSAI may contain two components: the Slice/Service Type (SST) and an optional Slice Differentiator (SD). The number of bits to indicate the SST may be (but is not limited to) 8 bits. The value of SST may range from 0 to 255, but is not limited thereto, where value 0 to 127 may belong to the standardized SST range and value 128 to 255 may belong to the operator-specific range. Standardized SST values may provide a way for establishing global interoperability for slicing so that PLMNs can support the roaming use case more efficiently for the most commonly used Slice/Service Types. For example, value 1 may represent the slice suitable for the handling of 5G eMBB, value 2 may represent the slice suitable for the handling of URLLC, value 3 may represent the slice suitable for the handling of massive IoT, value 4 may represent the slice suitable for the handling of V2X service, and value X (e.g., X may be a standardized SST value) may represent the slice suitable for the handling of Multimedia Broadcast/Multicast Service (MBMS) service, NR-light service, or Non-Terrestrial Networks (NTN) service. In one implementation, a RAN slice (e.g., RAN support of network slicing) may be uniquely identified by an S-NSSAI. A RAN slice associated with the corresponding network slice may be uniquely identified by the S-NSSAI that uniquely identifies the corresponding network slice. In one implementation, the corresponding network slice with which a RAN slice is associated may be uniquely identified by an S-NSSAI.

S-NSSAIs may be classified into configured NSSAI, rejected NSSAI, allowed NSSAI, requested NSSAI, and subscribed NSSAI, but are not limited thereto. In one implementation, the UE may receive the configured NSSAI, which may include a set of (new) configured S-NSSAIs for the selected/registered PLMN and/or cell/network, from the network/cell via an RRC message or NAS message. In one implementation, the UE may receive the rejected NSSAI from the network/cell via an RRC message/NAS message. The rejected NSSAI may include a (sub)set of the UE's requested S-NSSAI sent by the UE to the network/cell via an RRC message/NAS message. The rejected NSSAI may indicate the S-NSSAI(s) rejected by the network/cell. In one implementation, the UE may receive the allowed NSSAI from the network/cell via an RRC message/NAS message. The allowed NSSAI may include a (sub)set of the UE's requested S-NSSAI sent by the UE to the network/cell via an RRC message/NAS message. The network/cell may select a (sub)set of the UE's requested NSSAI, which is sent by the UE to the network/cell, as (part of) the allowed NSSAI. The network/cell may provide a (sub)set of S-NSSAIs not included in the UE's requested NSSAI as (part of) the allowed NSSAI, where the network/cell supports the (sub)set of S-NSSAIs. The network/cell may send the allowed NSSAI to the UE via an RRC message/NAS message. In one implementation, the UE may receive the allowed NSSAI, which may include a set of subscribed NSSAI marked as default and available at the network/cell, from the network/cell via an RRC message/NAS message, if the UE does not send the UE's requested NSSAI to the network/cell via an RRC message/NAS message or if the UE's requested NSSAI are not present in the subscribed S-NSSAIs. The subscribed S-NSSAIs may be S-NSSAIs based on the subscriber information to which the UE is subscribed to use in a PLMN/cell/network. The subscribed S-NSSAI may be included in the subscription information in the UE. Based on an (PLMN or NPN) operator's policy, one or more subscribed S-NSSAIs may be marked as a default S-NSSAI. If an S-NSSAI is marked as a default, the network may be expected to serve the UE with a related applicable network slice instance when the UE does not send any permitted S-NSSAI to the network in a NAS message (e.g., Registration Request message) and/or RRC message, as part of the requested NSSAI.

### Definition, determination and signaling of UE's intended slices

In one implementation, the UE's intended slices may be indicated by S-NSSAIs. In one implementation, the UE's intended slices may be the subscribed S-NSSAIs, e.g., preconfigured in the UE's subscription information. In one implementation, the UE's intended slices may be a set of S-NSSAIs determined by the UE/network/cell based on the subscribed S-NSSAIs, requested S-NSSAIs, allowed S-NSSAIs, rejected S-NSSAIs, and/or configured S-NSSAIs, which are updated and signaled via dedicated signaling (e.g., RRC message and NAS message) between the UE and the network/cell. In one implementation, the UE's intended slice may be the allowed S-NSSAI(s). In one implementation, the UE's intended slice may be the requested S-NSSAI(s). In one implementation, the UE's intended slice may be the allowed S-NSSAI(s) in one condition (e.g., for paging, RAN notification area update (RNAU) procedure, intra-frequency/inter-frequency/inter-RAT cell (re)selection), while the UE's intended slice may be the requested S-NSSAI(s) in another condition (e.g., for cell selection, initial registration, requesting new S-NSSAI(s)).

In one implementation, the UE may determine one or more S-NSSAIs as the default S-NSSAI(s) for the UE's intended slice based on the subscribed S-NSSAIs, requested S-NSSAIs, allowed S-NSSAIs, rejected S-NSSAIs, configured S-NSSAIs, and/or the slices that the UE is applying for. In one implementation, the network/cell may determine one or more S-NSSAIs as the default S-NSSAI(s) for the UE's intended slice based on the subscribed S-NSSAIs, request S-NSSAIs, allowed S-NSSAIs, rejected S-NSSAIs, configured S-NSSAIs, and/or the slices that the UE is applying for.

In one implementation, the UE's intended slices may be equally prioritized.

In one implementation, the UE's intended slices may be prioritized, e.g., from the highest priority to the lowest priority. The priority of the UE's intended slices may be determined by the UE (e.g., USIM), the network (e.g., NAS signaling), or the cell (e.g., AS signaling). In addition, the priority of the UE's intended slices may be PLMN-specific at the UE. In other words, the UE may be configured with more than one priority rule and one given priority rule may be associated with one PLMN identity. Moreover, the UE may determine which priority rule to apply after a PLMN selection procedure.

In one implementation, the UE's intended slices with priority (or being (equally) prioritized) may be indicated by the UE/network/cell as prioritized S-NSSAIs, which may also be referred to as preferred S-NSSAIs. A collection of prioritized S-NSSAIs may be referred to as prioritized NSSAI. In one implementation, the UE's intended slices without priority (or not being (equally) prioritized) may be indicated by the UE/network/cell as intended S-NSSAIs. A collection of default S-NSSAIs may be referred to as intended NSSAI. In one implementation, the UE's intended slices derived from the default S-NSSAIs may be indicated by the UE/network/cell as default S-NSSAIs. A collection of default S-NSSAIs may be referred to as default NSSAI.

In some implementations, if the priority of the UE's intended slices is determined (or updated) by the UE, the UE may not signal the priority of the UE's intended slices to the network/cell.

In some implementations, if the priority of the UE's intended slices is determined (or updated) by the UE, the UE may signal the priority of all the UE's intended slices or the priority of part of the UE's intended slices explicitly in the dedicated signaling to the network/cell. In some implementations, a source base station may deliver the UE's intended slice(s) and/or the priority(ies) of the UE's intended slice(s) associated with a UE to a target base station (e.g., for handover (HO) purposes). In one implementation, the UE may transmit the priority value (e.g., 1 may refer to the highest priority and 0 may refer to the lowest priority, 0 may refer to the highest priority and 1 may refer to the lowest priority) and the associated UE's intended slice to the network/cell in the dedicated signaling. In one implementation, the UE may transmit a list of the UE's intended slices in order, where the first (or the last) entry of the list may represent the UE's intended slice with the highest priority, to the network/cell in dedicated signaling. The serving RAN may store the received priority of the UE's intended slices as part of AS context or UE Inactive AS Context (if the UE moves to the RRC_INACTIVE state) or UE NAS context. The UE may also store the given priority (associated with one or more than one PLMN) in the AS context, UE INACTIVE AS context, or NAS context.

In some implementations, if the priority of the UE's intended slices is determined (or updated) by the UE, the UE may signal the UE's intended slice with the highest priority to the network/cell in dedicated signaling. In one implementation, the UE's intended slice with the highest priority may be the default slice used for cell (re)selection and/or mobility procedures (e.g., intra-RAT handover, inter-RAT handover, SN addition/modification/change/release procedures, PSCell change, Inter-Master Node handover with/without Secondary Node change, MN to eNB/gNB Change, eNB/gNB to Master Node change) when the UE is in RRC_CONNECTED state.

In some implementations, if the priority of the UE's intended slices is determined (or updated) by the network/cell, the network/cell may signal the priority of all the UE's intended slices or the priority of part of the UE's intended slices explicitly in dedicated signaling (or system information) to the UE. In one implementation, the network/cell may transmit the priority value (e.g., 1 may refer to the highest priority, 0 may refer to the lowest priority, 0 may refer to the highest priority and 1 may refer to the lowest priority) and the associated UE's intended slice to the UE in the dedicated signaling. In one implementation, the network/cell may transmit a list of the UE's intended slices in order, where the first (or the last) entry of the list may represent the UE's intended slice with the highest priority, to the UE in dedicated signaling.

In some implementations, if the priority of the UE's intended slices is determined (or updated) by the network/cell, the network/cell may signal the UE's intended slice with the highest priority to the UE in dedicated signaling (or system information). In one implementation, the UE's intended slice with the highest priority may be the default slice used for cell (re)selection and/or mobility procedures when the UE is in the RRC_CONNECTED state (e.g., intra-RAT handover, inter-RAT handover, SN addition/modification/change/release procedures).

### The UE's intended slices for mobility procedures

In some implementations, the UE may perform mobility procedures (e.g., cell selection, intra-frequency cell reselection, inter-frequency cell reselection, inter-RAT cell reselection, paging, RAN paging, CN paging, RNA update) when the UE is in the RRC_IDLE/RRC_INACTIVE state based on the intended slice, the intended NSSAI, prioritized NSSAI, the UE's intended slice with the highest priority, or based on the default S-NSSAI(s).

In some implementations, the UE may perform mobility procedures (e.g., intra-RAT handover, inter-RAT handover, SN addition/modification/change/release procedures, PSCell change, Inter-Master Node handover with/without Secondary Node change, Master Node to eNB/gNB Change, eNB/gNB to Master Node change) when the UE is in the RRC _CONNECTED state based on the intended slice, the intended NSSAI, prioritized NSSAI, the UE's intended slice with the highest priority, or based on the default S-NSSAI(s).

### Interaction between NAS layer and RRC layer

In some implementations, if the UE receives the UE's intended slices in the upper layer (e.g., NAS layer) of the UE via dedicated signaling (e.g., NAS message) or if the UE determines, updates, prioritizes, or selects the UE's intended slices in the upper layer (e.g., NAS layer) of the UE, the upper layer of the UE may forward the information of the intended slices (e.g., intended NSSAI, prioritized NSSAI, priority information of the UE's intended slices) to the lower layer (e.g., RRC layer) of the UE. For example, the upper layer (e.g., NAS layer) of the UE may forward the UE's intended slice that requires the RAN support of network slicing to the AS layer (e.g., RRC layer). The AS layer (e.g., RRC layer) of the UE may perform the mobility procedures when the UE is in the RRC _IDLE/RRC_INACTIVE state or may perform the mobility procedures when the UE is in the RRC_CONNECTED state based on the received information of the UE's intended slices. In some implementations, if the AS layer (e.g., RRC layer) of the UE receives the information of the intended slices (e.g., intended NSSAI, prioritized NSSAI, priority information of the UE's intended slices) from the upper layer (e.g., NAS layer) of the UE, the UE may perform the idle/inactive mode mobility procedures (e.g., cell (re)selection, intra-frequency cell reselection, inter-frequency cell reselection, inter-RAT cell reselection, RNAU procedure, paging, CN paging, RAN paging) if the UE is in the RRC_IDLE/RRC_INACTIVE state. In some implementations, if the AS layer (e.g., RRC layer) of the UE receives the information of the intended slices (e.g., intended NSSAI, prioritized NSSAI, priority information of the UE's intended slices) from the upper layer (e.g., NAS layer) of the UE, the UE may perform the connected mode mobility procedures (e.g., intra-RAT handover, inter-RAT handover, SN addition/modification/change/release procedures) if the UE is in the RRC_CONNECTED state.

In some implementations, if the lower layer (e.g., RRC layer) of the UE receives (information of) the UE's intended slices via the dedicated signaling (e.g., RRC message) or if the UE determines, updates, prioritizes, or selects the UE's intended slices in the lower layer (e.g., RRC layer) of the UE, the lower layer of the UE may forward the information of the intended slices (e.g., intended NSSAI, prioritized NSSAI, priority information of the UE's intended slices) to the upper layer (e.g., NAS layer) of the UE. For example, the lower layer (e.g., RRC layer) of the UE may forward the UE's intended slice that can be supported by RAN slice to the upper layer (e.g., NAS layer) of the UE. The NAS layer may store or update the UE's slice information. The UE may signal the UE's slice information to the network via dedicated signaling (e.g., NAS messages).

In some implementations, if the lower layer (e.g., RRC layer) of the UE receives an indicator associated with a request of RAN support of network slicing (e.g. RAN slice) from the upper layer (e.g., NAS layer) of the UE, the UE may perform the idle/inactive mode mobility procedure (e.g., to camp on or be served by a cell supporting the UE's intended slices) if the UE is in the RRC_IDLE/RRC_INACTIVE state to support the network slice from the RAN perspective (e.g., RAN slice). In some implementations, if the lower layer (e.g., RRC layer) of the UE receives an indicator associated with a request of RAN support of network slicing from the upper layer (e.g., NAS layer) of the UE, the UE may perform the connected mode mobility procedure (e.g., to camp on or be served by a cell supporting the UE's intended slices) if the UE is in the RRC_CONNECTED state to support the network slice from the RAN perspective (e.g., RAN slice). However, in some implementations, it is possible that the outcome of the idle/inactive/connected mode mobility procedure is that the UE cannot find a cell supporting the UE's intended slice and/or the RAN slice, and the UE camps on or is served by a cell not supporting the UE's intended slice and/or the RAN slice. In some implementations, if the UE successfully camps on or is served by a cell supporting the UE's intended slice and/or the RAN slice, the lower layer (e.g., RRC layer) of the UE may send an indicator associated with the (request of) RAN slice to the upper layer (e.g., NAS layer) of the UE.

In some implementations, if the UE receives an indicator associated with a request of RAN support of network slicing from the network, the UE may perform the idle/inactive mode mobility procedure (e.g., to camp on or be served by a cell supporting the UE's intended slices) if the UE is in the RRC_IDLE/RRC_INACTIVE state to support the network slice from the RAN perspective (e.g., RAN slice). In some implementations, if the UE receives an indicator associated with a request of RAN support of network slicing from the network, the UE may perform the connected mode mobility procedure (e.g., to camp on or be served by a cell supporting the UE's intended slices) if the UE is in the RRC_CONNECTED state to support the network slice from the RAN perspective (e.g., RAN slice). However, in some implementations, it is possible that the outcome of the idle/inactive/connected mode mobility procedure is that the UE cannot find a cell supporting the UE's intended slice and/or the RAN slice, and the UE camps on or is served by a cell not supporting the UE's intended slice and/or the RAN slice. In some implementations, if the UE successfully camps on or is served by a cell supporting the UE's intended slice and/or the RAN slice, the UE may send an indicator associated with the (request of) RAN slice to the network.

### Slice-based intra-frequency (or inter-frequency) measurement and cell reselection

### Measurement rules for intra-frequency (or inter-frequency) cell reselection

In some implementations, the UE may not choose to perform the (slice-based) intra-frequency (or inter-frequency) measurements if at least one of the conditions is fulfilled: (1) if the serving/camped cell fulfils Srxlev > S_{IntraSearchP} and Squal > S_{IntraSearchQ}; (2) if the serving/camped cell supports at least one of the UE's intended slices; (3) if the serving/camped cell does not support all the UE's intended slices. The UE may check the condition (2) and (3) when the UE updates, receives, or selects the UE's intended slices, when the UE receives the updated UE's intended slices transmitted and/or selected and/or allowed from the network/cell, when the UE terminates one of the UE's intended slice, or when the UE receives an indication that the network/cell would terminate one of the UE's intended slices via dedicated signaling from the network/cell. The phrase "the UE terminates an intended slice" means that the UE stops treating a slice as the intended slice. For example, the UE's intended slices include slice #1 and slice #2 at first, and then the UE terminates slice #2 when the UE stops treating slice #2 as one of the UE's intended slices. It is noted that Srxlev may be the cell selection RX level value (dB). Squal may be the cell selection quality value (dB). S_{IntraSearchP} may be the Srxlev threshold (in dB) for intra-frequency (or inter-frequency) measurements. S_{IntraSearchQ} may be the Squal threshold (in dB) for intra-frequency (or inter-frequency) measurements.

### Intra-frequency (or inter-frequency) cells that the UE measures

In some implementations, the UE may measure intra-frequency (or inter-frequency) cells that are explicitly or implicitly related to the UE's intended slices when the UE performs intra-frequency (or inter-frequency) measurement during the intra-frequency (or inter-frequency) cell reselection. Therefore, after the intra-frequency (or inter-frequency) measurement, the UE may (re)select a cell among the measured cells, which may support the UE's intended slices.

In some implementations, the candidate intra-frequency cells of which the UE may measure the signal quality may be (1) explicitly indicated by the serving/camped cell to the UE, and/or (2) any cells on the same frequency (e.g., when all the cells on the same frequency support the same set of slices, when all the cells on the same frequency support at least one same slice).

### Explicitly indicated by the serving/camped cell to the UE

### Dedicated signaling

### Purely decided by the NW

In some implementations, the UE may receive a list of candidate intra-frequency (and/or inter-frequency) cells to perform intra-frequency (or inter-frequency) measurement from the serving/camped cell via dedicated signaling. For example, when the UE transitions (from the RRC_CONNECTED/RRC_INACTIVE state) to the RRC_IDLE state, the UE may receive an RRC message (e.g., RRC Release message without the suspend configuration, RRC Reject message) including a list of candidate intra-frequency (and/or inter-frequency) cells (e.g., a white list, an allowed list) for the UE to perform the intra-frequency (or inter-frequency) measurement for the (slice-based) intra-frequency (or inter-frequency) cell reselection. The white list (or allowed list) may include a list of cell IDs (e.g., PCI or *cellidentity*). The cells identified by the list of cell IDs (e.g., PCI or *cellidentity*) may support at least one of the UE's intended slices or may support all the UE's intended slices. In one implementation, the cells identified by the list of cell IDs may support at least one same slice. The *cellidentity* may be unique within a PLMN. The *cellidentity* may be unique globally. For another example, when the UE transitions (from the RRC_CONNECTED/RRC_INACTIVE state) to the RRC_IDLE state, the UE may receive the RRC message (e.g., RRC Release message without the suspend configuration, RRC Reject message) including a list of prohibited (or forbidden) intra-frequency (and/or inter-frequency) cells (e.g., a black list, a forbidden list, a prohibited list, a block-list, a drop-list) for the UE to not perform the intra-frequency (or inter-frequency) measurement for the (slice-based) intra-frequency (or inter-frequency) cell reselection. The black list (or forbidden list or prohibited list) may include a list of cell IDs (e.g., PCI or *cellidentity*). The cells identified by the list of cell IDs (e.g., PCI or *cellidentity*) may not support the UE's intended slices or may not support any of the UE's intended slices.

For example, when the UE transitions to the RRC_INACTIVE state, the UE may receive an RRC message (e.g., RRC Release message with the suspend configuration, RRC Reject message) including a list of candidate intra-frequency (and/or inter-frequency) cells (e.g., a white list, an allowed list, an allow-list, an accept-list) for the UE to perform the intra-frequency (or inter-frequency) measurement. The list of candidate intra-frequency (and/or inter-frequency) cells may be within or outside the suspend configuration in the RRC Release message. The white list may include a list of cell IDs (e.g., PCI or *cellidentity*). In one implementation, the cells identified by the list of cell IDs may support at least one same slice. For another example, when the UE transitions to the RRC_INACTIVE state, the UE may receive the RRC message (e.g., RRC Release message without the suspend configuration, RRC Reject message) including a list of prohibited intra-frequency cells (e.g., a black list, a forbidden list, a prohibited list, a block-list, a drop-list) for the UE to not perform the intra-frequency measurement. The list of prohibited intra-frequency cells may be within or outside the suspend configuration in the RRC Release message. The black list may include a list of cell IDs (e.g., PCI or *cellidentity*). It is noted that the list of candidate intra-frequency cells indicated by the serving/camped cell may support at least one of (or all) the S-NSSAI(s) in the receiving UE's intended NSSAI, the receiving UE's intended slice with the highest priority, at least one of (or all) the S-NSSAI(s) in the receiving UE's prioritized NSSAI, or at least one of (or all) the S-NSSAI(s) in the receiving UE's default S-NSSAI(s). For example, the serving/camped cell may receive/store the slice information of the candidate intra-frequency (or inter-frequency) cells from the candidate intra-frequency (or inter-frequency) cells (e.g., via inter-node RRC messages, via Xn interface messages). The slice information of the candidate intra-frequency (or inter-frequency) cells may include the S-NSSAI (or NSSAI or slices) supported by the cells and/or the priority information of the S-NSSAI (or NSSAI or slices) supported by the cells. The serving/camped cell may determine (and/or select) the list of candidate intra-frequency (or inter-frequency) cells based on the slice information of the candidate intra-frequency (or inter-frequency) cells for a specific UE or a group of UEs and/or the slice information of the specific UE or the group of UEs (e.g., the UE's intended slices, the UE's intended NSSAI, the UE's intended slices with the highest priority, the UE's prioritized NSSAI, the UE's default S-NSSAI(s)). For instance, the selected/determined list of candidate intra-frequency (or inter-frequency) cells may (or may not) support the UE's intended slices. For instance, the slices supported by the selected/determined list of candidate intra-frequency (or inter-frequency) cells may (or may not) match (or belong to) the slice information of the specific UE or the group of UEs. The serving/camped cell may transmit the list of candidate intra-frequency (or inter-frequency) cells (e.g., their cell IDs) and/or the slice information of the list of candidate intra-frequency (or inter-frequency) cells to a specific UE via dedicated signaling (e.g., RRC message, other system information). The serving/camped cell may transmit the list of candidate intra-frequency (or inter-frequency) cells (e.g., their cell IDs) and/or the slice information of the list of candidate intra-frequency (or inter-frequency) cells to a specific UE via system information (e.g., broadcast, other system information). The receiving UE may be the UE that receives the list of candidate intra-frequency cells indicated by the serving/camped cell.

### The UE may determine within the cell set provided by the NW

In some implementations, the UE may receive more than one list of candidate intra-frequency (and/or inter-frequency) cells to perform the (slice-based) intra-frequency (or inter-frequency) measurement from the serving/camped cell via dedicated signaling. For example, when the UE transitions to the RRC_IDLE state, the UE may receive an RRC message (e.g., RRC Release message without the suspend configuration, RRC Reject message) including more than one list of candidate intra-frequency (and/or inter-frequency) cells (e.g., more than one white list) for the UE to perform the intra-frequency (or inter-frequency) measurement. Each white list may include a list of cell IDs (e.g., PCI) and/or the associated information of supported slices by the cells identified by the list of cell IDs in the white list and/or the priority information of the associated information of supported slices by the cells identified by the list of cell IDs in the white list. Alternatively, each white list may include a list of pairs of a cell ID and/or associated information of supported slices of a cell identified by the cell ID and/or the priority information of the associated information of supported slices by a cell identified by the cell ID. The associated information of supported slices may include the S-NSSAI(s), SST(s), SD(s), a priority indicator, and/or a default indicator. The priority information of the associated information of supported slices may include the prioritized S-NSSAI(s), the prioritized SST(s), the prioritized SD(s), and/or the priority value/indicator for S-NSSAI(s).

In one implementation, each white list may include a list of cell IDs, and each white list may be implicitly associated with slices supported by cells identified by the list of cell IDs (e.g., the name of the white list may imply the associated information of supported slices by the cells). For example, a default white list may include a list of cell IDs identifying the cells supporting (at least one of, or all) S-NSSAI(s) in the receiving UE's default NSSAI. For another example, a highest priority white list may include a list of cell IDs identifying the cells supporting (at least one of, or only) S-NSSAI(s) in the receiving UE's intended slice with the highest priority. For another example, a prioritized white list may include a list of cell IDs identifying the cells supporting (at least one of, or all) S-NSSAI(s) in the receiving UE's prioritized NSSAI. For another example, an intended white list may include a list of cell IDs identifying the cells supporting (at least one of, or all) S-NSSAI(s) in the receiving UE's intended NSSAI.

In some implementations, if the UE receives more than one list of candidate intra-frequency (and/or inter-frequency) cells to perform the intra-frequency (or inter-frequency) measurement from the serving/camped cell via dedicated signaling, the UE may perform the intra-frequency (or inter-frequency) measurement based on the received more than one list of candidate intra-frequency (and/or inter-frequency) cells. In some implementations, if the UE receives more than one list of candidate intra-frequency (and/or inter-frequency) cells, the cells of which the UE measures the signal quality may be indicated by the received more than one list of candidate intra-frequency (and/or inter-frequency) cells. In some implementations, if the UE receives at least the list of candidate intra-frequency (and/or inter-frequency) cells explicitly or implicitly associated with the information of the UE's intended slice with the highest priority, the UE may perform the intra-frequency (or inter-frequency) measurement based on the list of candidate intra-frequency (and/or inter-frequency) cells first. If the UE cannot reselect a suitable cell based on the intra-frequency (or inter-frequency) measurement of the list of candidate cells, the UE may perform the intra-frequency (or inter-frequency) measurement based on another received list of candidate intra-frequency (and/or inter-frequency) cells. In some implementations, if the UE receives at least the list of candidate intra-frequency (and/or inter-frequency) cells explicitly or implicitly associated with the information of the UE's default NSSAI, the UE may perform the intra-frequency (or inter-frequency) measurement based on the list of candidate intra-frequency (and/or inter-frequency) cells first. If the UE cannot reselect a suitable cell based on the intra-frequency (or inter-frequency) measurement of the list of candidate cells, the UE may perform the intra-frequency (or inter-frequency) measurement based on another received list of candidate intra-frequency (and/or inter-frequency) cells.

It should be noted that the UE may prioritize (1) the list of candidate intra-frequency (and/or inter-frequency) cells explicitly or implicitly associated with the information of the UE's intended slice with the highest priority, (2) the list of candidate intra-frequency (and/or inter-frequency) cells explicitly or implicitly associated with the information of the UE's prioritized NSSAI, (3) the list of candidate intra-frequency (and/or inter-frequency) cells explicitly or implicitly associated with the information of the UE's default S-NSSAI(s), and (4) the list of candidate intra-frequency (and/or inter-frequency) cells explicitly or implicitly associated with the information of the UE's intended NSSAI, in the order of (1)>(2)>(3)>(4), if the UE receives at least two of (1), (2), (3) and (4).

### System information

### Purely decided by the NW

In some implementations, the UE may receive a list of candidate intra-frequency (and/or inter-frequency) cells to perform the intra-frequency (or inter-frequency) measurement from the serving/camped cell via system information (e.g., slice-related system information block, neighboring cell related system information (only) for intra-frequency cell reselection, neighboring cell related system information (only) for inter-frequency cell reselection). For example, the RRC_IDLE/RRC_INACTIVE UE may receive the system information periodically broadcast by the serving/camped cell, on-demand broadcast by the serving/camped cell, and/or on-demand unicast by the serving/camped cell. In some implementations, the system information may include a list of candidate intra-frequency (and/or inter-frequency) cells (e.g., a white list, an allowed list, an allow-list, an accept-list) for the UE to perform the intra-frequency (or inter-frequency) measurement. The white list may include a list of cell IDs (e.g., PCI or *cellidentity*). In another implementation, the system information may include a list of prohibited intra-frequency (or inter-frequency) cells (e.g., a black list, a forbidden list, a prohibited list, a drop-list, a block-list) for the UE to not perform the intra-frequency (or inter-frequency) measurement. The black list may include a list of cell IDs (e.g., PCI or *cellidentity*). It is noted that the list of candidate intra-frequency (and/or inter-frequency) cells indicated by the serving/camped cell may support at least one of (or all) the S-NSSAI(s) in the receiving UE's intended NSSAI, the receiving UE's intended slice with the highest priority, at least one of (or all) the S-NSSAI(s) in the receiving UE's prioritized NSSAI, at least one of (or all) the S-NSSAI(s) in the receiving UE's default S-NSSAI(s). The receiving UE may be the UE that receives the list of candidate intra-frequency (and/or inter-frequency) cells indicated by the serving/camped cell.

### The UE may determine within the cell set provided by the NW

In some implementations, the UE may receive more than one list of candidate intra-frequency (and/or inter-frequency) cells to perform the intra-frequency (or inter-frequency) measurement from the serving/camped cell via system information (e.g., slice-related system information block, neighboring cell related system information (only) for intra-frequency cell reselection, neighboring cell related system information (only) for inter-frequency cell reselection). For example, the RRC_IDLE/RRC_INACTIVE UE may receive the system information periodically broadcast by the serving/camped cell, on-demand broadcast by the serving/camped cell, and/or on-demand unicast by the serving/camped cell. In some implementations, the system information may include more than one list of candidate intra-frequency (and/or inter-frequency) cells (e.g., more than one white list) for the UE to perform the intra-frequency (and/or inter-frequency) measurement. Each white list may include a list of cell IDs (e.g., PCI) and/or the associated information of supported slices by the cells identified by the list of cell IDs in this white list and/or the priority information of the associated information of supported slices by the cells identified by the list of cell IDs in the white list. Alternatively, each white list may include a list of pairs of a cell ID and/or associated information of supported slices of a cell identified by the cell ID and/or the priority information of the associated information of supported slices by a cell identified by the cell ID. The associated information of supported slices may include the S-NSSAI(s), SST(s), SD(s), a priority indicator, and/or a default indicator. The priority information of the associated information of supported slices may include the prioritized S-NSSAI(s), the prioritized SST(s), the prioritized SD(s), and/or the priority value/indicator for S-NSSAI(s).

In one implementation, each white list may include a list of cell IDs, and each white list may be implicitly associated with the slices supported by these cells identified by the list of cell IDs (e.g., the name of the white list may imply the associated information of supported slices by the cells). For example, a default white list may include a list of cell IDs identifying the cells supporting (at least one of, or all) S-NSSAI(s) in the receiving UE's default NSSAI. For another example, a highest priority white list may include a list of cell IDs identifying the cells supporting (at least one of, or only) S-NSSAI(s) in the receiving UE's intended slice with the highest priority. For another example, a prioritized white list may include a list of cell IDs identifying the cells supporting (at least one of, or all) S-NSSAI(s) in the receiving UE's prioritized NSSAI. For another example, an intended white list may include a list of cell IDs identifying the cells supporting (at least one of, or all) S-NSSAI(s) in the receiving UE's intended NSSAI.

In some implementations, if the UE receives more than one list of candidate intra-frequency (and/or inter-frequency) cells to perform the intra-frequency (or inter-frequency) measurement from the serving/camped cell via system information, the UE may perform the intra-frequency (or inter-frequency) measurement based on the received more than one list of candidate intra-frequency (and/or inter-frequency) cells. In some implementations, if the UE receives more than one list of candidate intra-frequency (and/or inter-frequency) cells, the cells of which the UE measures the signal quality may be indicated by the received more than one list of candidate intra-frequency (or inter-frequency) cells. In some implementations, if the UE receives at least the list of candidate intra-frequency (and/or inter-frequency) cells (and/or a set of intra-frequency (and/or inter-frequency) cells, which may not be in the same white list) explicitly or implicitly associated with the information of the UE's intended slice with the highest priority, the UE may perform the intra-frequency (or inter-frequency) measurement based on the list of candidate intra-frequency (and/or inter-frequency) cells (and/or the set of intra-frequency (and/or inter-frequency) cells) first. If the UE cannot reselect a suitable cell based on the intra-frequency (or inter-frequency) measurement of the list of candidate intra-frequency (and/or inter-frequency) cells (and/or the set of intra-frequency (and/or inter-frequency) cell), the UE may perform the intra-frequency (or inter-frequency) measurement based on another received list of candidate intra-frequency (and/or inter-frequency) cells (and/or another set of intra-frequency (and/or inter-frequency) cells). In some implementations, if the UE receives at least the list of candidate intra-frequency (and/or inter-frequency) cells (and/or a set of intra-frequency (and/or inter-frequency) cells, which may not be in the same white list) explicitly or implicitly associated with the information of the UE's default NSSAI, the UE may perform the intra-frequency (or inter-frequency) measurement based on the list of candidate intra-frequency (and/or inter-frequency) cells (and/or the set of intra-frequency (and/or inter-frequency) cells) first. If the UE cannot reselect a suitable cell based on the intra-frequency (and/or inter-frequency) measurement of the list of candidate intra-frequency (and/or inter-frequency) cells (and/or the set of intra-frequency (and/or inter-frequency) cells), the UE may perform the intra-frequency (or inter-frequency) measurement based on another received list of candidate intra-frequency (and/or inter-frequency) cells (and/or another set of intra-frequency (and/or inter-frequency) cells).

It should be noted that the UE may prioritize (1) the list of candidate intra-frequency (and/or inter-frequency) cells (and/or the set of intra-frequency (and/or inter-frequency) cells) explicitly or implicitly associated with the information of the UE's intended slice with the highest priority, (2) the list of candidate intra-frequency (and/or inter-frequency) cells (and/or the set of intra-frequency (and/or inter-frequency) cells) explicitly or implicitly associated with the information of the UE's prioritized NSSAI, (3) the list of candidate intra-frequency (and/or inter-frequency) cells (and/or the set of intra-frequency (and/or inter-frequency) cells) explicitly or implicitly associated with the information of the UE's default S-NSSAI(s), and (4) the list of candidate intra-frequency (and/or inter-frequency) cells (and/or the set of intra-frequency (and/or inter-frequency) cells) explicitly or implicitly associated with the information of the UE's intended NSSAI, in the order of (1)>(2)>(3)>(4), if the UE receives at least two of (1), (2), (3) and (4).

### Implicitly indicated to the UE

In one implementation, cells that the UE measures during the intra-frequency (or inter-frequency) cell reselection may be implicitly configured or indicated to the UE. For example, the rule specifying which cells are to be measured may be predefined or preconfigured when the network is deployed. One example is that cells operating on the same frequency share the same set of slices. Another example is that cells operating on different frequencies share the same set of slices.

In one implementation, the UE may measure any cell on the same frequency when all the cells on the same frequency support the same set of slices. In one implementation, the UE may measure any cell on the same frequency when all the cells on the same frequency support at least one same slice.

In some implementations, the UE may perform the intra-frequency (and/or inter-frequency) measurement on any cells on the same frequency carrier (or on different frequency carriers) if at least one of the following conditions is met: the UE does not (explicitly or implicitly) receive the candidate list of intra-frequency (and/or inter-frequency) cells for intra-frequency (or inter-frequency) measurement, the UE receives information that all the cells on the same frequency (or different frequencies) support the same set of slices via dedicated signaling or system information from the serving/camped cell, the UE is (pre)configured with information that all the cells on the same frequency (or different frequencies) support the same set of slices, the UE receives information that all the cells on the same frequency (or different frequencies) support at least one same slice, which is the UE's intended slice, via dedicated signaling or system information from the serving/camped cell, and the UE is (pre)configured with information that all the cells on the same frequency (or different frequencies) support at least one same slice, which is the UE's intended slice. The UE's intended slice may be the slice in the UE's intended NSSAI, the slice in the UE's prioritized NSSAI, the UE's intended slice with the highest priority, and/or the slice in the UE's default S-NSSAI(s).

### Cells that the UE (re)selects after the intra-frequency (or inter-frequency) measurement

In some implementations, the UE may measure intra-frequency (or inter-frequency) cells, which may or may not be explicitly or implicitly related to the UE's intended slices when the UE performs the intra-frequency (or inter-frequency) measurement during the intra-frequency (or inter-frequency) cell reselection. For example, the UE may measure intra-frequency (or inter-frequency) cells irrespective of slices supported by the cells. After the UE performs the intra-frequency (or inter-frequency) measurement, the UE may further consider the slices supported by the measured cells to (re)select the intra-frequency (or inter-frequency) cell. In one implementation, the UE may read the system information of the measured cells to acquire the information of slices supported by the measured cells.

### Slice information broadcast by the NW

In some implementations, a cell may broadcast information of its supported slice(s) in system information (e.g., SIB1, slice-specific SIB, SIB2). The information of its supported slice(s) may include (at least one of) the prioritized S-NSSAI(s), the S-NSSAI(s), and the allowed S-NSSAI(s) supported by the cell. The information of its supported slice(s) may include the priority information associated with (at least one of) the prioritized S-NSSAI(s), the S-NSSAI(s), and the allowed S-NSSAI(s) supported by the cell. For example, an indicator indicates the slice (or S-NSSAI) with the highest (or lowest) priority. For example, the order of (at least one of) the prioritized S-NSSAI(s), the S-NSSAI(s), and the allowed S-NSSAI(s) supported by the cell may be the priority order (e.g., from the highest to the lowest, from the lowest to the highest). The cell may by default (or mandatorily) broadcast the information of its supported slice(s). The cell may broadcast the information of its supported slice(s) if the cell is connected to a core network supporting network slice functions (e.g., 5GC). The cell may broadcast the information of its supported slice(s). The cell may broadcast a (Boolean) indicator indicating whether the cell supports slice(s) and/or slice-based cell reselection. The cell may broadcast a (Boolean) indicator indicating whether the UE camping on the cell is allowed to perform the slice-based intra-frequency (or inter-frequency) cell reselection. The cell may broadcast the information of its supported slice(s) if the cell supports the slice-specific cell (re)selection.

For example, if the UE receives the (Boolean) indicator from the camped/serving cell indicating that the UE camping on the camped/serving cell is allowed to perform the slice-based intra-frequency (or inter-frequency) cell reselection (e.g., the indicator is "1", the indicator is "allowed" in ENUMERATED format), the UE may perform the slice-based intra-frequency (or inter-frequency) cell reselection. If the UE does not receive the (Boolean) indicator from the camped/serving cell indicating that the UE camping on the camped/serving cell is allowed to perform the slice-based intra-frequency (or inter-frequency) cell reselection (e.g., the indicator is absent), or if the UE receives the (Boolean) indicator from the camped/serving cell indicating that the UE camping on the camped/serving cell is not allowed to perform the slice-based intra-frequency (or inter-frequency) cell reselection (e.g., the indicator is "0", the indicator is "NotAllowed" in ENUMERATED format), the UE may perform the legacy (intra-frequency or inter-frequency) cell reselection (e.g., without considering the network slice and/or RAN slice) instead of the slice-based intra-frequency (or inter-frequency) cell reselection. For another example, if the UE receives the information of the camped/serving cell's supported slice(s) from the camped/serving cell, the UE may perform the slice-based intra-frequency (or inter-frequency) cell reselection. If the UE does not receive the information of the camped/serving cell's supported slice(s) from the camped/serving cell, the UE may not perform the slice-based intra-frequency (or inter-frequency) cell reselection.

In some implementations, information of slice(s) supported by a cell broadcast in system information may include S-NSSAI(s), SST(s), SD(s), allowed S-NSSAI(s) (e.g., the slices allowed by the cell), requested S-NSSAI(s) (e.g., the slices requested by the cell), prioritized S-NSSAI(s) (e.g., the slices prioritized by the cell), indicator (e.g., a positive integer) corresponding to a slice, indicator (e.g., a positive integer) corresponding to an allowed slice (e.g., an allowed S-NSSAI allowed by the cell), indicator (e.g., a positive integer) corresponding to a requested slice (e.g., a requested S-NSSAI requested by the UE), the priority associated with a slice, the priority associated with an allowed slice (e.g., an allowed S-NSSAI allowed by the cell), the priority associated with a requested slice (e.g., a requested S-NSSAI requested by the UE), and/or the priority associated with a set of slice(s) (e.g., the set of slice(s) may include at least one of the slices, allowed slices, and requested slices). The UE may determine a cell's supported slice based on the information of the slice(s) supported by the cell broadcast in the system information. In some implementations, the UE may consider a slice with the highest priority as a default slice or a prioritized slice (e.g., prioritized S-NSSAI) supported by the cell.

In some implementations, after the UE performs the (slice-based) intra-frequency (or inter-frequency) measurements on neighboring cells, the UE may further read the system information (e.g., at least SIB 1) of the measured neighboring cells to acquire the information of slice(s) supported by the measured neighboring cell. The neighboring cells may fulfil the S criteria specified in TS 38.304 v15.5.0.

### Consider slice information for cell reselection after R criterion

In some implementations, if the UE is (pre)configured to or determines by itself to reselect a cell based on the UE's intended slices (e.g., slice(s) indicated by S-NSSAI(s) in the UE's intended NSSAI, by S-NSSAI(s) in the UE's prioritized NSSAI, and/or by S-NSSAI(s) in the UE's default S-NSSAI(s), the UE's intended slice with the highest priority), the UE may be further (pre)configured a value N or determine the value N by itself, where the value N represents the number of measured neighboring cells for intra-frequency (or inter-frequency) measurement and cell reselection. N may be a positive integer. In some implementations, if the UE may not measure N neighboring cells (e.g., the UE may not detect more neighboring cells due to poor received signal strength), the UE may perform slice-based cell reselection based on the measured neighboring cells, the number of which is at most N.

For the slice-based cell reselection, the UE may further consider the slice(s) supported by the measured neighboring cells. For example, among the at most N measured neighboring cells, the UE may reselect the cell that supports the UE's intended slice(s). If more than one cell among the at most N measured neighboring cells support the UE's intended slices, the UE may select and camp on a cell with the highest R value, which may be derived based on the R criteria specified in TS 38.304 v15.5.0. For another example, the UE may check the cell (e.g., by reading the system information of the cell) with the highest R value first. If the cell with the highest R value supports the UE's intended slice(s), the UE may reselect the cell without checking other neighboring cells. If the cell with the highest R value does not support the UE's intended slices, the UE may check a cell with the second highest R value. Similarly, if the cell with the second highest R value supports the UE's intended slices, the UE may reselect the cell without further checking other neighboring cells. If the cell with the second highest R value does not support the UE's intended slices, the UE may not reselect the cell and the UE may check a cell with the third highest R value, and so on. The number of neighboring cells that the UE checks may be at most N, where N may be configured by the NW or predefined.

In some implementation, if the UE is (pre)configured to or determines by itself to reselect a cell based on the UE's intended slices (e.g., slice(s) indicated by S-NSSAI(s) in the UE's intended NSSAI, by S-NSSAI(s) in the UE's prioritized NSSAI, and/or by S-NSSAI(s) in the UE's default S-NSSAI(s), the UE's intended slice with the highest priority), the UE may be further (pre)configured a value R_th or determine the value R_th by itself, where the value R_th represents a threshold of the R value. A measured neighboring cell with an R value greater than (or equal to) the R_th may be considered as a candidate cell for slice-based (intra-frequency or inter-frequency) cell reselection. For the slice-based (intra-frequency or inter-frequency) cell reselection, the UE may further consider the slice(s) supported by the measured neighboring cells.

In some implementations, the UE may rank the measured intra-frequency (or inter-frequency) neighboring cells from the highest R value to the lowest R value according to the R criterion specified in TS 38.304 v15.5.0. In one implementation, the maximum number of ranked neighboring cells may be N. In one implementation, the UE may rank the measured neighboring cells with the R value greater than or equal to R _th. In some implementations, among the measured intra-frequency (or inter-frequency) neighboring cells that support the UE's intended slices (e.g., slice(s) indicated by S-NSSAI(s) in the UE's intended NSSAI, by S-NSSAI(s) in the UE's prioritized NSSAI, and/or by S-NSSAI(s) in the UE's default S-NSSAI(s), the UE's intended slice with the highest priority), the UE may (re)select a suitable cell with the highest R value.

In some implementations, if the UE is (pre)configured to or determines by itself to reselect a cell supporting at least one of (or all) slice(s) indicated by S-NSSAI(s) in the UE's prioritized NSSAI, the UE may (re)select a suitable cell with the highest R value among the measured intra-frequency neighboring cells that support at least one (or all) slice(s) indicated by S-NSSAI(s) in the UE's prioritized NSSAI. That is, the (re)selected suitable cell may not be the cell with the highest R value.

In some implementations, if the UE is (pre)configured to or determines by itself to reselect a cell supporting the UE's intended slice with the highest priority, the UE may (re)select a suitable cell with the highest R value among the measured intra-frequency (or inter-frequency) neighboring cells that support the UE's intended slice with the highest priority. That is, the (re)selected suitable cell may not be the cell with the highest R value.

In some implementations, if the UE is (pre)configured to or determine by itself to reselect a cell supporting at least one of (or all) slice(s) indicated by S-NSSAI(s) in the UE's default S-NSSAI(s), the UE may (re)select a suitable cell with the highest R value among the measured intra-frequency neighboring cells that support at least one (or all) slice(s) indicated by S-NSSAI(s) in the UE's default S-NSSAI(s). That is, the (re)selected suitable cell may not be the cell with the highest R value.

In some implementations, among the measured and ranked neighboring cells, if the UE is (pre)configured to or determines by itself to reselect a cell supporting at least one of (or all) slice(s) indicated by S-NSSAI(s) in the UE's prioritized NSSAI, and if the UE cannot find and (re)select a suitable cell supporting at least one of (or all) slice(s) indicated by S-NSSAI(s) in the UE's prioritized NSSAI, the UE may reselect a suitable cell with the highest R value without considering the slice-based (intra-frequency or inter-frequency) cell reselection (e.g., the reselected cell may not support any of the UE's intended slice(s)), or may reselect a suitable cell supporting at least one of the UE's intended slice(s) (e.g., intended NSSAI, default NSSAI, requested NSSAI).

In some implementations, among the measured and ranked neighboring cells, if the UE is (pre)configured to or determines by itself to reselect a cell supporting the UE's intended slice with the highest priority, and if the UE cannot find and (re)select a suitable cell supporting the UE's intended slice with the highest priority, the UE may reselect a suitable cell with the highest R value without considering the slice-based (intra-frequency or inter-frequency) cell reselection (e.g., the reselected cell may not support any of the UE's intended slice(s)), or may reselect a suitable cell supporting at least one of the UE's intended slice(s) (e.g., intended NSSAI, default NSSAI, prioritized NSSAI).

In some implementations, among the measured and ranked neighboring cells, if the UE is (pre)configured to or determines by itself to reselect a cell supporting at least one of (or all) slice(s) indicated by S-NSSAI(s) in the UE's default NSSAI, and if the UE cannot find and (re)select a suitable cell supporting at least one of (or all) slice(s) indicated by S-NSSAI(s) in the UE's default NSSAI, the UE may reselect a suitable cell with the highest R value without considering the slice-based (inter-frequency or intra-frequency) cell reselection (e.g., the reselected cell may not support any of the UE's intended slice(s)), or may reselect a suitable cell supporting at least one of the UE's intended slice(s) (e.g., intended NSSAI).

In some implementations, if a first cell with a higher R value supports the UE's intended slice(s) but the first cell gives the UE's intended slice(s) as a lower priority compared to a second cell with a lower R value supporting the UE's intended slice but giving the UE's intended slice with a higher priority, the UE may (re)select the second cell with the lower R value.

In some implementations, if the UE receives an indicator from a camped/serving cell (e.g., in system information) that the slice-based intra-frequency (or inter-frequency) cell reselection is not allowed, the UE may perform the intra-frequency (or inter-frequency) cell reselection without considering the slices supported by the (measured) neighboring cells and/or without considering the UE's intended slice(s). The UE may perform the intra-frequency (or inter-frequency) cell reselection only based on the R criterion.

Network (NW), cell, camped cell, serving cell, base station, gNB, eNB, and ng-eNB may be used interchangeably in the present disclosure. In some implementations, some of these items may refer to the same network entity.

The disclosed mechanism may be applied to any RAT. The RAT may include, but is not limited to, NR, NR-U, LTE, E-UTRA connected to 5GC, LTE connected to 5GC, E-UTRA connected to EPC, and LTE connected to EPC. The disclosed mechanism may be applied for UEs in public networks, or in private networks (e.g., NPN, standalone NPN (SNPN), public network integrated NPN (PNI-NPN)).

The disclosed mechanism may be used for licensed frequencies and/or unlicensed frequencies.

System information (SI) may include MIB, SIB1, and other SI. Minimum SI may include MIB and SIB1. Other SI may refer to SIB2, SIB3, SIB4, SIB5, and other SIB(s).

Dedicated signaling may refer to (but not limited to) RRC message(s), such as RRC (Connection) Setup Request message, RRC (Connection) Setup message, RRC (Connection) Setup Complete message, RRC (Connection) Reconfiguration message, RRC Reconfiguration message with the information including reconfiguration with sync configuration, RRC Reconfiguration message without the information of reconfiguration with sync configuration, the information of reconfiguration with sync configuration included in RRC Reconfiguration message, RRC (Connection) Reconfiguration Complete message, RRC (Connection) Resume Request message, RRC (Connection) Resume message, RRC (Connection) Resume Complete message, RRC (Connection) Reestablishment Request message, RRC (Connection) Reestablishment message, RRC (Connection) Reestablishment Complete message, RRC (Connection) Reject message, RRC (Connection) Release message, RRC System Information Request message, UE Assistance Information message, UE Capability Enquiry message, and UE Capability Information message. The UE may monitor the UE-specific Search Space (USS) to derive the time/frequency resources (e.g., PDSCH resources) for the reception of the dedicated signaling.

The RRC_IDLE/RRC_INACTIVE UE may camp on a cell (e.g., camped cell). The RRC_CONNECTED UE may be served by a (serving) cell. Implementations in the present disclosure may be applicable for RRC_IDLE/RRC_INACTIVE/RRC_CONNECTED UE(s).

The UE may be served by a cell, e.g., serving cell. The serving cell may serve (but is not limited to serving) an RRC _CONNECTED UE. The serving cell may be (but is not limited to) a suitable cell.

The UE may camp on a cell, e.g., camped cell. The camped cell may be a suitable cell or an acceptable cell.

The disclosed mechanism(s) may be applied for UEs to access (but is not limited to accessing) a PCell.

Primary Cell: The MCG cell, operating on the primary frequency, in which the UE either performs the initial connection establishment procedure or initiates the connection reestablishment procedure.

Primary SCG Cell: For Dual Connectivity operation, the SCG cell in which the UE performs random access when performing the Reconfiguration with Sync procedure.

Serving Cell: For a UE in the RRC_CONNECTED state not configured with CA/DC there is only one serving cell including the primary cell. For a UE in the RRC_CONNECTED state configured with CA/DC the term "serving cells" is used to denote the set of cells including the Special Cell(s) and all secondary cells.

Secondary Cell: For a UE configured with CA, a cell providing additional radio resources on top of Special Cell.

Special Cell: For Dual Connectivity operation, the term Special Cell refers to the PCell of the MCG or the PSCell of the SCG; otherwise, the term Special Cell refers to the PCell.

Master Cell Group: in MR-DC, a group of serving cells associated with the Master Node, including the SpCell (e.g., PCell) and optionally one or more SCells.

Master node: In MR-DC, the radio access node that provides the control plane connection to the core network. It may be a Master eNB (in EN-DC), a Master ng-eNB (in NGEN-DC) or a Master gNB (in NR-DC and NE-DC).

Secondary Cell Group: In MR-DC, a group of serving cells associated with the Secondary Node, including the SpCell (e.g., PSCell) and optionally one or more SCells.

Secondary node: In MR-DC, the radio access node, with no control plane connection to the core network, providing additional resources to the UE. It may be a gNB (in EN-DC), a Secondary ng-eNB (in NE-DC), or a Secondary gNB (in NR-DC and NGEN-DC).

Public network operator(s) may operate the public land mobile network(s).

The private network (e.g., NPN) may support vertical and local area network (LAN) services. The NPN operators may operate the private networks. The private networks may be classified into standalone non-public networks (SNPNs) and public network integrated non-public networks (PNI-NPNs). Operators may focus on the PNI-NPN solutions applicable for a much wider range of use cases such as SOHO (Small Office Home Office) and residential, private network coverage deployments, and so on.

5G system will be enhanced to support NPN. Two network identifies are introduced for NPN: Network ID (NID) and Closed Access Group (CAG) ID. 5G RAN may also implement NPN by enhancing features such as non-public network identification, discovery, selection/reselection, access control, and mobility restrictions.

RAN slice, network slice, and slice may be used interchangeably in the present disclosure.

A white list, an allowed list, an allow-list, and an accept-list may be used interchangeably in the present disclosure.

A black list, a forbidden list, a prohibited list, a block-list, and a drop-list may be used interchangeably in the present disclosure.

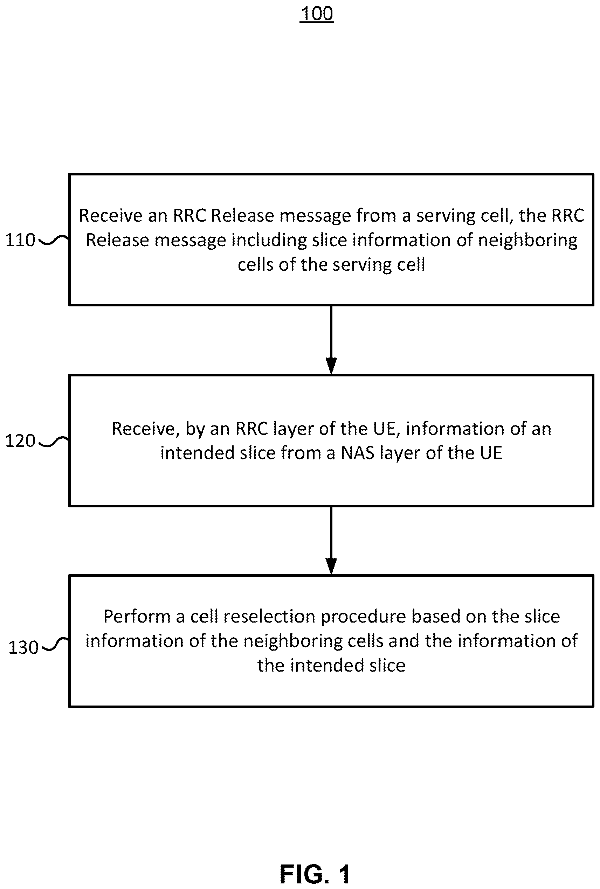

FIG. 1 is a flowchart illustrating a method 100 performed by a UE for cell reselection according to an example implementation of the present disclosure. In action 110, the UE receives an RRC Release message from a serving cell, the RRC Release message including slice information of neighboring cells of the serving cell. In action 120, the UE receives, by an RRC layer of the UE, information of an intended slice from a NAS layer of the UE. In action 130, the UE performs a cell reselection procedure based on the slice information of the neighboring cells and the information of the intended slice. For example, the UE may determine whether the slice information of the neighboring cells matches the information of the intended slice. For example, the UE may measure the neighboring cells whose slice information matches (or belongs to) the information of the intended slice during the cell reselection procedure.

The RRC Release message received in action 110 may instruct the UE to transition from the RRC_CONNECTED state to either the RRC_INACTIVE state or the RRC_IDLE state. The UE may perform mobility procedures (e.g., cell selection, intra-frequency cell reselection, inter-frequency cell reselection, inter-RAT cell reselection) when the UE is in either the RRC_INACTIVE state or the RRC_IDLE state.

In one implementation, the slice information of the neighboring cells may indicate at least one of slices supported (or allowed) by the neighboring cells and cell identities of the neighboring cells supporting one same slice. The one same slice commonly supported by the neighboring cells may be one of the UE's intended slices. The UE can identify which cells are to be measured and selected based on the slice information acquired in the RRC Release message.

The information of the intended slice received in action 120 may guide the UE to perform a slice-based cell reselection procedure in action 130. In one implementation, the information of the intended slice includes at least one of a requested S-NSSAI and an allowed S-NSSAI. Specifically, the UE may transmit the requested S-NSSAI to a cell/network. In response, the cell/network may transmit the allowed S-NSSAI and/or the rejected S-NSSAI. In one implementation, the intended slice may be the requested S-NSSAI for one use case/scenario, and the intended slice may be the allowed S-NSSAI for another different use case/scenario.

In one implementation, the intended slice includes at least one of a network slice and a RAN slice. Network slicing may be a network architecture that enables multiplexing of virtualized and independent logical networks on the same physical network infrastructure. A network slice may be an isolated end-to-end network tailored to fulfil specific requirements requested by a particular application. RAN slicing may refer to the RAN support of the network slicing. A RAN slice may be the RAN part of the network slice.

In one implementation, the serving cell that transmits the RRC Release message does not support the intended slice of the UE. The UE may perform the cell reselection procedure in action 130 based on its intended slice and the slice information of the neighboring cells to search for another cell that supports its intended slice. By applying the method 100, because slice information is taken into consideration during the cell reselection procedure, the UE can spend less time finding a target cell and completing the cell reselection procedure. Therefore, the UE can perform mobility procedures efficiently to access the corresponding slices, saving time and processing power.

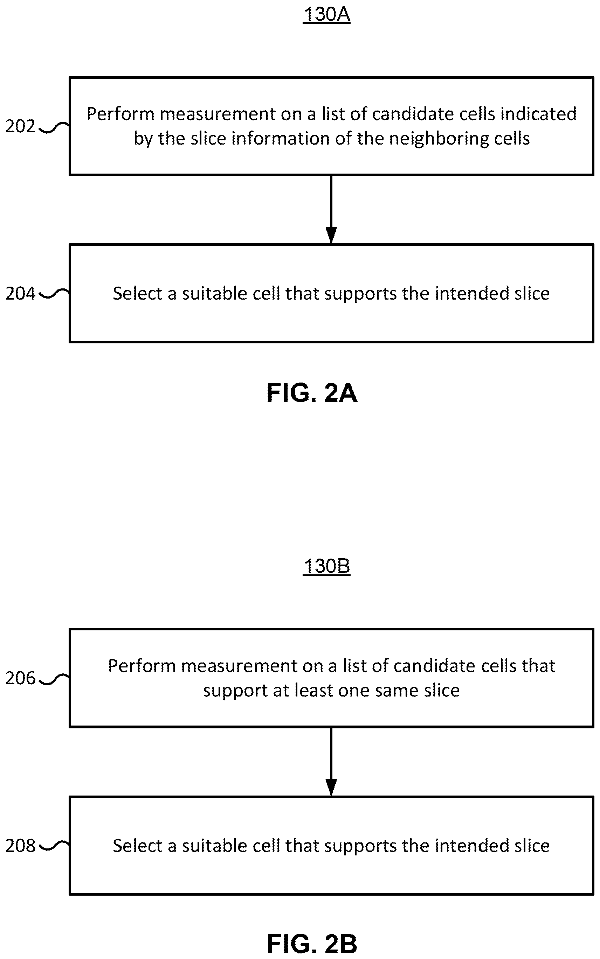

FIG. 2A is a flowchart illustrating a cell reselection procedure 130A according to an example implementation of the present disclosure. The cell reselection procedure 130A corresponds to one implementation of the action 130 illustrated in FIG. 1. In action 202, the UE performs measurement on a list of candidate cells indicated by the slice information of the neighboring cells. That is, cells to be measured by the UE during the cell reselection procedure may be explicitly indicated to the UE via the RRC Release message. Measurement of the neighboring cells in action 202 may refer to the S criteria and the R criteria previously disclosed. By taking the intended slice into consideration, in action 204, the UE selects a suitable cell that supports the intended slice. The definition of a suitable cell considering the intended slice is disclosed previously.

FIG. 2B is a flowchart illustrating a cell reselection procedure 130B according to another example implementation of the present disclosure. The cell reselection procedure 130B corresponds to one implementation of the action 130 illustrated in FIG. 1. In action 206, the UE performs measurement on a list of candidate cells that support at least one same slice. That is, cells to be measured by the UE during the cell reselection procedure may be implicitly indicated to the UE. For example, which cells are to be measured may be preconfigured or predefined. In one implementation, the cells on the frequency on which the UE performs the cell reselection procedure 130B may support the same set of slice(s). In one implementation, the cells on the frequency on which the UE performs the cell reselection procedure 130B may support at least one same slice. Measurement of the neighboring cells in action 206 may refer to the S criteria and the R criteria previously disclosed. Because slice information is taken into consideration during the measurement process for the cell reselection procedure, the UE does not need to consume power and time on measuring cells that do not meet the UE's requirements. By taking the intended slice into consideration, in action 208, the UE selects a suitable cell that supports the intended slice.

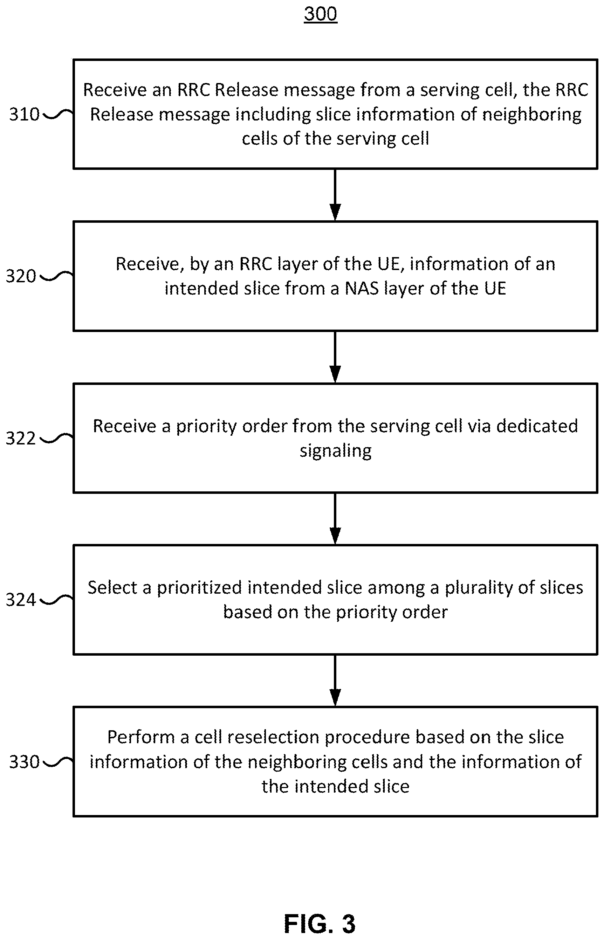

FIG. 3 is a flowchart illustrating a method 300 performed by a UE for cell reselection considering a prioritized intended slice according to an example implementation of the present disclosure. Actions 310, 320, and 330 correspond to actions 110, 120, and 130 illustrated in FIG. 1, respectively. In one implementation, the information of the intended slice may indicate a plurality of slices. In action 322, the UE receives a priority order from the serving cell via dedicated signaling. The network may indicate the priority order to the UE via system information in another implementation. In action 324, the UE selects a prioritized intended slice among the plurality of slices based on the priority order. The prioritized intended slice may also be referred to as a preferred intended slice. The UE then performs the cell reselection procedure in action 330 based on the prioritized intended slice obtained in action 324.

It should be noted that action 322 may be optionally omitted. In one implementation, the UE may determine the priority order of the plurality of slices by itself. Actions illustrated in FIG. 3 should not be construed as necessarily order dependent. The order in which the process is described is not intended to be construed as a limitation. As illustrated in FIG. 3, the UE may receive multiple slices from the NAS layer and the UE may perform prioritization between the multiple slices to determine the prioritized intended slice. The prioritization may be based on a priority order determined by the UE itself or received from the network.

It should be noted that implementations disclosed in the present disclosure may be applied to slice-based intra-frequency cell reselection, inter-frequency cell reselection, and inter-RAT cell reselection.

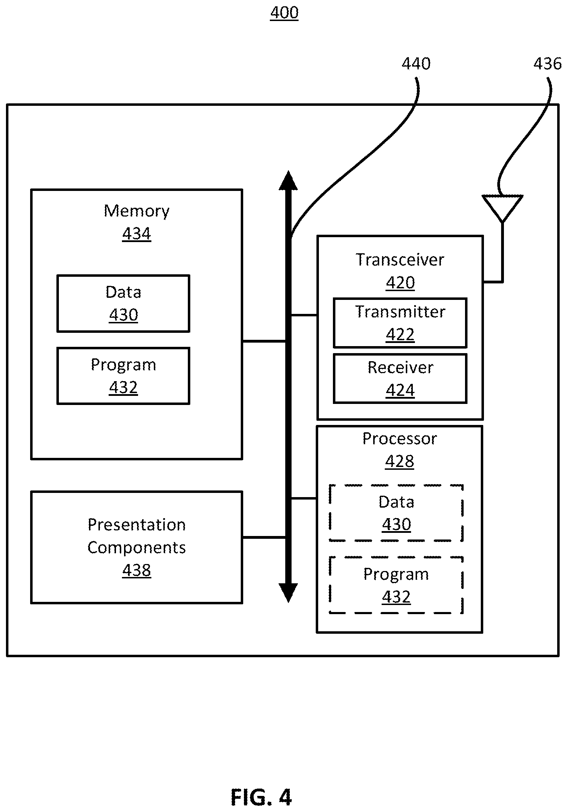

FIG. 4 is a block diagram illustrating a node 400 for wireless communication in accordance with various aspects of the present disclosure. As illustrated in FIG. 4, a node 400 may include a transceiver 420, a processor 428, a memory 434, one or more presentation components 438, and at least one antenna 436. The node 400 may also include a radio frequency (RF) spectrum band module, a BS communications module, a network communications module, and a system communications management module, Input / Output (I/O) ports, I/O components, and a power supply (not illustrated in FIG. 4).

Each of the components may directly or indirectly communicate with each other over one or more buses 440. The node 400 may be a UE or a BS that performs various functions disclosed with reference to FIGS. 1 through 3.

The transceiver 420 has a transmitter 422 (e.g., transmitting/transmission circuitry) and a receiver 424 (e.g., receiving/reception circuitry) and may be configured to transmit and/or receive time and/or frequency resource partitioning information. The transceiver 420 may be configured to transmit in different types of subframes and slots including but not limited to usable, non-usable and flexibly usable subframes and slot formats. The transceiver 420 may be configured to receive data and control channels.

The node 400 may include a variety of computer-readable media. Computer-readable media may be any available media that may be accessed by the node 400 and include volatile (and/or non-volatile) media and removable (and/or non-removable) media.

The computer-readable media may include computer-storage media and communication media. Computer-storage media may include both volatile (and/or non-volatile media), and removable (and/or non-removable) media implemented in any method or technology for storage of information, such as computer-readable instructions, data structures, program modules, or data.

Computer-storage media may include RAM, ROM, EPROM, EEPROM, flash memory (or other memory technology), CD-ROM, Digital Versatile Disks (DVD) (or other optical disk storage), magnetic cassettes, magnetic tape, magnetic disk storage (or other magnetic storage devices), etc. Computer-storage media may not include a propagated data signal. Communication media may typically embody computer-readable instructions, data structures, program modules, or other data in a modulated data signal, such as a carrier wave or other transport mechanisms, and may include any information delivery media.

The term "modulated data signal" may mean a signal that has one or more of its characteristics set or changed in such a manner as to encode information in the signal. Communication media may include wired media, such as a wired network or direct-wired connection, and wireless media, such as acoustic, RF, infrared, and other wireless media. Combinations of any of the previously listed components should also be included within the scope of computer-readable media.

The memory 434 may include computer-storage media in the form of volatile and/or non-volatile memory. The memory 434 may be removable, non-removable, or a combination thereof. Example memory may include solid-state memory, hard drives, optical-disc drives, etc. As illustrated in FIG. 4, the memory 434 may store a computer-readable and/or computer-executable program 432 (e.g., software codes) that are configured to, when executed, cause the processor 428 to perform various functions disclosed herein, for example, with reference to FIGS. 1 through 3. Alternatively, the program 432 may not be directly executable by the processor 428 but may be configured to cause the node 400 (e.g., when compiled and executed) to perform various functions disclosed herein.

The processor 428 (e.g., having processing circuitry) may include an intelligent hardware device, e.g., a Central Processing Unit (CPU), a microcontroller, an ASIC, etc. The processor 428 may include memory. The processor 428 may process the data 430 and the program 432 received from the memory 434, and information transmitted and received via the transceiver 420, the baseband communications module, and/or the network communications module. The processor 428 may also process information to send to the transceiver 420 for transmission via the antenna 436 to the network communications module for transmission to a CN.

One or more presentation components 438 may present data indications to a person or another device. Examples of presentation components 438 may include a display device, a speaker, a printing component, a vibrating component, etc.

In view of the present disclosure, it is obvious that various techniques may be used for implementing the disclosed concepts. Moreover, while the concepts have been disclosed with specific reference to certain implementations, a person of ordinary skill in the art may recognize that changes may be made in form and detail. As such, the disclosed implementations are considered in all respects as illustrative and not restrictive. It should also be understood that the present disclosure is not limited to the specific implementations disclosed. Still, many rearrangements, modifications, and substitutions are possible.

## Claims

1. A method performed by a user equipment (400), UE, for cell reselection, the method comprising:
receiving (310) a Radio Resource Control, RRC, Release message from a serving cell, the RRC Release message including slice information of neighboring cells of the serving cell;
receiving (320), by an RRC layer of the UE (400), from a Non-Access Stratum, NAS, layer of the UE (400), first information indicating one or more network slices for which a cell reselection procedure is to be performed;
receiving (322), from the serving cell, via dedicated signaling, second information indicating priority information associated with the one or more network slices; and
performing (330) the cell reselection procedure to select a suitable cell that supports one of the one or more network slices indicated by the first information based on the slice information of the neighboring cells, the first information, and the second information.

2. The method of claim 1, wherein the first information includes at least one of a requested Single Network Slice Selection Assistance Information, S-NSSAI, or an allowed S-NSSAI.

3. The method of claim 1, wherein the slice information of the neighboring cells indicates at least one slice supported by the neighboring cells and cell identities of the neighboring cells supporting the at least one slice.

4. The method of claim 1, wherein the cell reselection procedure comprises:
performing at least one measurement on a list of candidate cells indicated by the slice information of the neighboring cells.

5. The method of claim 1, wherein the cell reselection procedure comprises:
performing at least one measurement on a list of candidate cells that support at least one same slice.

6. The method of claim 1, further comprising:
selecting a prioritized intended slice among the one or more network slices indicated by the first information based on the second information.

7. The method of claim 1, wherein the serving cell does not support the one or more network slices indicated by the first information.

8. A user equipment (400), UE, for cell reselection, comprising:
at least one processor (428); and
at least one memory (434) coupled to the at least one processor (428), wherein the at least one memory (434) stores a computer-executable program that, when executed by the at least one processor (428), causes the UE (400) to perform the method of any of claims 1 to 7.

## Patentansprüche

1. Verfahren, das von einem Benutzergerät (400), UE, zur Zellneuselektion durchgeführt wird, wobei das Verfahren umfasst:
Empfangen (310) einer Radio-Resource-Control,RRC,-Freigabenachricht von einer versorgenden Zelle, wobei die RRC-Freigabenachricht Slice-Informationen über benachbarte Zellen der versorgenden Zelle enthält;
Empfangen (320), durch eine RRC-Schicht des UE (400), von einer Non-Access-Stratum,NAS,-Schicht des UE (400), erster Informationen, die einen oder mehrere Netzwerk-Slices angeben, für die eine Zellneuselektionsprozedur durchzuführen ist;
Empfangen (322), von der versorgenden Zelle über dedizierte Signalisierung, zweiter Informationen, die Prioritätsinformationen angeben, die mit dem einen oder den mehreren Netzwerk-Slices verknüpft sind; und
Durchführen (330) der Zellneuselektionsprozedur, um eine geeignete Zelle auszuwählen, die einen des einen oder der mehreren durch die ersten Informationen angegebenen Netzwerk-Slices unterstützt, basierend auf den Slice-Informationen der benachbarten Zellen, den ersten Informationen und den zweiten Informationen.

2. Verfahren nach Anspruch 1, wobei die ersten Informationen zumindest eines von angeforderte Single-Network-Slice-Selection-Assistance-Informationen, S-NSSAI, oder eine zugelassene S-NSSAI enthalten.

3. Verfahren nach Anspruch 1, wobei die Slice-Informationen der benachbarten Zellen zumindest einen von den benachbarten Zellen unterstützten Slice sowie Zellidentitäten der benachbarten Zellen angeben, die den zumindest einen Slice unterstützen.

4. Verfahren nach Anspruch 1, wobei die Zellneuselektionsprozedur umfasst:
Durchführen zumindest einer Messung an einer Liste von Kandidatenzellen, die durch die Slice-Informationen der benachbarten Zellen angegeben werden.

5. Verfahren nach Anspruch 1, wobei die Zellneuselektionsprozedur umfasst:
Durchführen zumindest einer Messung an einer Liste von Kandidatenzellen, die zumindest einen gleichen bzw. gemeinsamen Slice unterstützen.

6. Verfahren nach Anspruch 1, ferner umfassend:
Auswählen eines priorisierten beabsichtigten Slice aus dem einen oder den mehreren durch die ersten Informationen angegebenen Netzwerk-Slices basierend auf den zweiten Informationen.

7. Verfahren nach Anspruch 1, wobei die versorgende Zelle den einen oder die mehreren durch die ersten Informationen angegebenen Netzwerk-Slices nicht unterstützt.

8. Benutzergerät (400), UE, zur Zellneuauswahl, umfassend:
zumindest einen Prozessor (428); und
zumindest einen Speicher (434), der mit dem zumindest einen Prozessor (428) gekoppelt ist, wobei der zumindest eine Speicher (434) ein computerausführbares Programm speichert, das, wenn es von dem zumindest einen Prozessor (428) ausgeführt wird, das UE (400) veranlasst, das Verfahren nach einem der Ansprüche 1 bis 7 durchzuführen.

## Revendications

1. Procédé mis en œuvre par un équipement utilisateur (400), UE, pour la resélection de cellule, le procédé comprenant :
la réception (310) d'un message de libération de commande de ressource radio, RRC, à partir d'une cellule de desserte, le message de libération RRC incluant des informations de tranche de cellules voisines de la cellule de desserte ;
la réception (320), par une couche RRC de l'UE (400), à partir d'une couche de strate de non-accès, NAS, de l'UE (400), de premières informations indiquant une ou plusieurs tranches de réseau pour lesquelles une procédure de resélection de cellule doit être exécutée ;
la réception (322), à partir de la cellule de desserte, par le biais d'une signalisation dédiée, de deuxièmes informations indiquant des informations de priorité associées aux une ou plusieurs tranches de réseau ; et
la mise en œuvre (330) de la procédure de resélection de cellule afin de sélectionner une cellule appropriée prenant en charge l'une des une ou plusieurs tranches de réseau indiquées par les premières informations, sur la base des informations de tranche des cellules voisines, des premières informations et des deuxièmes informations.

2. Procédé selon la revendication 1, dans lequel les premières informations incluent au moins l'une parmi une information d'assistance à la sélection de tranche de réseau unique, S-NSSAI, demandée ou une S-NSSAI autorisée.

3. Procédé selon la revendication 1, dans lequel les informations de tranche des cellules voisines indiquent au moins une tranche prise en charge par les cellules voisines ainsi que des identités de cellule des cellules voisines prenant en charge l'au moins une tranche.

4. Procédé selon la revendication 1, dans lequel la procédure de resélection de cellule comprend :
l'exécution d'au moins une mesure sur une liste de cellules candidates indiquée par les informations de tranche des cellules voisines.

5. Procédé selon la revendication 1, dans lequel la procédure de resélection de cellule comprend :
l'exécution d'au moins une mesure sur une liste de cellules candidates prenant en charge au moins une même tranche.

6. Procédé selon la revendication 1, comprenant en outre :
la sélection d'une tranche cible priorisée parmi les une ou plusieurs tranches de réseau indiquées par les premières informations, sur la base des deuxièmes informations.

7. Procédé selon la revendication 1, dans lequel la cellule de desserte ne prend pas en charge les une ou plusieurs tranches de réseau indiquées par les premières informations.

8. Équipement utilisateur (400), UE, destiné à la resélection de cellule, comprenant :
au moins un processeur (428) ; et
au moins une mémoire (434) couplée à l'au moins un processeur (428), dans lequel l'au moins une mémoire (434) stocke un programme exécutable par ordinateur, lequel, lorsqu'il est exécuté par l'au moins un processeur (428), amène l'UE (400) à mettre en œuvre le procédé selon l'une quelconque des revendications 1 à 7.
